# EUROPEAN PATENT APPLICATION

(11) **EP 4 723 506 A1**
(43) Date of publication of application: **08.04.2026**
(21) Application number: 24836348.3
(22) Date of filing: 04.07.2024
(51) Int. Cl.: H04B 7/06, H04W 72/23, G06N 20/00, H04L 5/00

(54) **METHOD AND APPARATUS FOR TRAINING MODEL FOR ARTIFICIAL INTELLIGENCE/MACHINE LEARNING-BASED COMMUNICATION**

(30) Priority: 06.07.2023 KR 20230087741; 28.06.2024 KR 20240085445
(71) Applicant: KT Corporation, Seongnam-si, Gyeonggi-do 13606 (KR)
(72) Inventor: LEE, Eun-Jong, Seongnam-si, Gyeonggi-do 13606 (KR)
(74) Representative: BCKIP Part mbB
(86) International application number: PCT/KR2024/009443
(87) International publication number: WO 2025/009901

(57) **Abstract**

Provided are a method and apparatus for training a model for artificial intelligence and/or machine learning (AI/ML)-based communication. A terminal receives, from a base station, data for AI/ML model training, and performs AI/ML model training based on the received data. After performing the AI/ML model training, the terminal transmits, to the base station, a first message indicating termination of collection of the data.

## Description

### Technical Field

The present disclosure relates to wireless communications in 5G NR, 5G-Advanced, and 6G.

### Background Art

As more communication devices require greater data traffic, the necessity for a next generation 5G system, enhanced over legacy LTE systems, is emerging. In the next generation 5G system, scenarios can be classified into Enhanced Mobile BroadBand (eMBB), Ultra-reliability and low-latency communication (URLLC), Massive Machine-Type Communications (mMTC), and the like.

Here, eMBB corresponds to a next generation mobile communication scenario having characteristics such as high spectrum efficiency, high user experienced data rate, high peak data rate, and the like. URLLC corresponds to a next generation mobile communication scenario having characteristics such as ultra-reliability, ultra-low latency, ultra-high availability, and the like (e.g., V2X, Emergency Service, Remote Control). mMTC corresponds to a next generation mobile communication scenario having characteristics such as low cost, low energy, short packet, and massive connectivity (e.g., IoT).

### Disclosure of Invention

### Technical Problem

The disclosure of the present specification is to provide a method and apparatus for collecting data between a terminal (e.g., user equipment: UE) and a network when the terminal performs AI/ML model training to enable efficient beam management in a wireless communication system.

### Solution to Problem

In accordance with an embodiment, a method of a terminal may be provided for operation in a wireless communication system. The method of the terminal may include receiving data for AI/ML (artificial intelligence/machine learning) model training, performing the AI/ML model training based on the data, and transmitting a first message indicating termination of collection of the data after performing the AI/ML model training

In accordance with another embodiment, a method of a base station may be provided for operation in a wireless communication system. The method of the base station may include transmitting data for AI/ML (artificial intelligence/machine learning) model training, and receiving a first message indicating termination of collection of the data after performing the AI/ML model training.

In accordance with further another embodiment, a communication apparatus may be provided for operation in a wireless communication system. The apparatus may include: at least one processor; and at least one memory configured to store instructions and be operably electrically connectable to the at least one processor, wherein operations performed based on the instructions executed by the at least one processor include: receiving data for AI/ML (artificial intelligence/machine learning) model training, performing the AI/ML model training based on the data, and transmitting a first message indicating termination of collection of the data after performing the AI/ML model training.

In accordance with still another embodiment, a base station may be provided for operation in a wireless communication system. The base station may include: at least one processor; and at least one memory configured to store instructions and be operably electrically connectable to the at least one processor, wherein operations performed based on the instructions executed by the at least one processor include: transmitting data for AI/ML (artificial intelligence/machine learning) model training, and receiving a first message indicating termination of collection of the data after performing the AI/ML model training.

The base station may transmit configuration information for reception of the data to the terminal, and the terminal may receive the configuration information, wherein the configuration information may include event information associated with the termination of collection of the data, and the first message may be transmitted based on the event information.

The event information may include at least one of threshold information associated with performance of the AI/ML model and time information for termination of the AI/ML model training.

The first message may be for deactivating transmission of the data.

Meanwhile, the terminal may transmit a second message requesting transmission of the data to the base station, and the base station may receive the second message. Based on the second message, the configuration information may be transmitted from the base station to the terminal, and the terminal may receive the configuration information.

The second message may include at least one of time information for termination of the AI/ML model training and information on an amount of the data.

### Advantageous Effects of Invention

According to the embodiments of the disclosure, in AI/ML model training performed by the terminal, it is possible to prevent the terminal from falling into unnecessary model training for an extended period of time. In addition, this provides the effect of reducing the overall system overhead.

### Brief Description of Drawings

FIG. 1 illustrates a wireless communication system.
FIG. 2 illustrates a structure of a radio frame used in NR.
FIGS. 3A to 3C illustrate exemplary architectures for a wireless communication service.
FIG. 4 illustrates a slot structure of a new radio (NR) frame.
FIG. 5 shows an example of a subframe type in NR.
FIG. 6 illustrates a structure of a self-contained slot.
FIG. 7 illustrates an example of initial beam measurement and selection in NR.
FIG. 8 illustrates an example of an initial access procedure between a terminal and a base station in NR.
FIG. 9 illustrates an example of candidate beam configuration in NR.
FIGS. 10A to 10C illustrate three procedures for beam management in NR.
FIGS. 11A to 11C illustrate examples of beam reporting procedures in NR.
FIGS. 12A and 12B illustrate an example of beam measurement and spatial domain beam prediction using AI/ML.
FIG. 13 illustrates an example of temporal domain beam prediction using AI/ML.
FIG. 14 illustrates an operation method of a terminal according to embodiment of the disclosure.
FIG. 15 illustrates an operation method of a terminal according to another embodiment of the disclosure.
FIG. 16 illustrates an operation method of a terminal according to another embodiment of the disclosure.
FIGS. 17A to 17B illustrate procedures between a terminal and a base station according to embodiments of the disclosure.
FIG. 18 illustrates a procedure between a terminal and a base station for event-based model training according to an embodiment of the disclosure.
FIG. 19 illustrates a procedure between a terminal and a base station for event-based model training according to another embodiment of the disclosure.
FIG. 20 illustrates a procedure between a terminal and a base station for event-based model training according to another embodiment of the disclosure.
FIG. 21 illustrates a procedure between a terminal and a base station for event-based model training according to another embodiment of the disclosure.
FIGS. 22 to 23 illustrate procedures between a terminal and a base station for explaining model-training termination according to embodiments of the disclosure.
FIG. 24 shows apparatuses according to an embodiment of the disclosure.
FIG. 25 is a block diagram showing a configuration of a terminal according to an embodiment of the disclosure.
FIG. 26 is a configuration block diagram of a processor in which the disclosure is implemented.
FIG. 27 is a detailed block diagram of a transceiver of a first apparatus shown in FIG. 24 or a transceiving unit of an apparatus shown in FIG. 25.

### Mode for the Invention

The technical terms used herein are intended to merely describe specific embodiments and should not be construed as limiting the disclosure. Further, the technical terms used herein should be, unless defined otherwise, interpreted as having meanings generally understood by those skilled in the art but not too broadly or too narrowly. Additionally, the technical terms used herein, which are determined not to exactly represent the spirit of the disclosure, should be replaced by or understood by such technical terms as being able to be exactly understood by those skilled in the art. Finally, the general terms used herein should be interpreted in the context as defined in the dictionary, but not in an excessively narrowed manner.

The expression of the singular form in the disclosure includes the meaning of the plural form unless the meaning of the singular form is definitely different from that of the plural form in the context. In the following description, the term 'include' or 'have' may represent the existence of a feature, a number, a step, an operation, a component, a part or the combination thereof described in the disclosure and may not exclude the existence or addition of another feature, another number, another step, another operation, another component, another part or the combination thereof.

The terms 'first' and 'second' are used for the purpose of explanation about various components, and the components are not limited to the terms 'first' and 'second'. The terms "first" and 'second' are only used to distinguish one component from another component. For example, a first component may be named as a second component without departing from the scope of the disclosure.

It will be understood that when an element or layer is referred to as being "connected to" or "coupled to" another element or layer, it can be directly connected or coupled to the other element or layer or intervening elements or layers may be present. In contrast, when an element is referred to as being "directly connected to" or "directly coupled to" another element or layer, there are no intervening elements or layers present.

Hereinafter, exemplary embodiments of the disclosure will be described in greater detail with reference to the accompanying drawings. In describing the disclosure, for ease of understanding, the same reference numerals are used to denote the same components throughout the drawings, and repetitive description on the same components will be omitted. Detailed description on well-known arts that are determined to make the gist of the disclosure unclear will be omitted. The accompanying drawings are provided to merely make the spirit of the disclosure readily understood, but not should be intended to be limiting of the disclosure. It should be understood that the spirit of the disclosure may be expanded to include its modifications, replacements or equivalents in addition to what is shown in the drawings.

In the disclosure, "A or B" may mean "only A", "only B", or "both A and B". In other words, "A or B" in the disclosure may be interpreted as "A and/or B". For example, "A, B or C" in the disclosure may mean "only A", "only B", "only C", or "any combination of A, B and C".

In the disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the disclosure, "at least one of A and B" may mean "only A", "only B" or "both A and B". In addition, the expression "at least one of A or B" or "at least one of A and/or B" in the disclosure may be interpreted as the same as "at least one of A and B".

In addition, in the disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the disclosure may mean "for example". In detail, when it is shown as "control information (PDCCH)", "physical downlink control channel (PDCCH)" may be proposed as an example of "control information". In other words, "control information" in the disclosure is not limited to "PDCCH", and "PDDCH" may be proposed as an example of "control information". In addition, even when shown as "control information (i.e., PDCCH)", "PDCCH" may be proposed as an example of "control information".

The technical features described individually in one drawing in this specification may be implemented separately or at the same time.

In the accompanying drawings, user equipment (UE) is illustrated by way of example, but the illustrated UE may be also referred to as a terminal, mobile equipment (ME), or the like. In addition, the UE may be a portable device such as a laptop computer, a mobile phone, a PDA, a smart phone, a multimedia device, or the like, or may be a non-portable device such as a PC or a vehicle-mounted device.

Hereinafter, the UE is used as an example of a device capable of wireless communication (e.g., a wireless communication device, a wireless device, or a wireless apparatus). The operation performed by the UE may be performed by any device capable of wireless communication. A device capable of wireless communication may also be referred to as a radio communication device, a wireless device, or a wireless apparatus.

A base station, a term used below, generally refers to a fixed station that communicates with a wireless device, and may be used to cover the meanings of terms including an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), a repeater(relay), and so on.

Although embodiments of the disclosure will be described based on an LTE system, an LTE-advanced (LTE-A) system, and an NR system, such embodiments may be applied to any communication system corresponding to the aforementioned definition.

### <Wireless Communication System>

With the success of long term evolution (LTE)/LTE-A (LTE-Advanced) for the 4th generation mobile communication, the next generation, i.e., 5^{th} generation (so called 5G) mobile communication has been commercialized and the follow-up studies are also ongoing.

The 5^{th} generation mobile communications defined by the International Telecommunication Union (ITU) refers to communication providing a data transmission rate of up to 20 Gbps and a minimum actual transmission rate of at least 100 Mbps anywhere. The official name of the 5^{th} generation mobile telecommunications is 'IMT-2020.'

The ITU proposes three usage scenarios, namely, enhanced Mobile Broadband (eMBB), massive Machine Type Communication (mMTC) and Ultra Reliable and Low Latency Communications (URLLC).

The URLLC relates to a usage scenario that requires high reliability and low latency. For example, services such as autonomous driving, factory automation, augmented reality require high reliability and low latency (e.g., a delay time of less than 1 ms). The delay time of current 4G (LTE) is statistically 21 to 43 ms (best 10%) and 33 to 75 ms (median). This is insufficient to support a service requiring a delay time of 1 ms or less. Next, the eMBB usage scenario relates to a usage scenario requiring mobile ultra-wideband.

That is, the 5G mobile communication system supports higher capacity than the current 4G LTE, and may increase the density of mobile broadband users and support device to device (D2D), high stability, and machine type communication (MTC). The 5G research and development also aims at a lower latency time and reduce battery consumption compared to a 4G mobile communication system to better implement the Internet of things. A new radio access technology (new RAT or NR) may be proposed for such 5G mobile communication.

An NR frequency band is defined as two types of frequency ranges: FR1 and FR2. The numerical value in each frequency range may vary, and the frequency ranges of the two types FR1 and FR2 may for example be shown in Table 1 below. For convenience of description, FR1 among the frequency ranges used in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values in the frequency range may vary in the NR system. For example, FR1 may range from 410 MHz to 7125 MHz as listed in [Table 1]. That is, FR1 may include a frequency band of 6 GHz (or 5850, 5900, and 5925 MHz) or above. For example, the frequency band of 6 GHz (or 5850, 5900, and 5925 MHz) or above may include an unlicensed band. The unlicensed band may be used for various purposes, such as, vehicle communication (e.g., autonomous driving).

Meanwhile, the 3GPP communication standards define downlink (DL) physical channels corresponding to resource elements (REs) carrying information originated from a higher layer, and DL physical signals which are used in the physical layer and correspond to REs that do not carry information originated from a higher layer. For example, physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH) are defined as DL physical channels, and reference signals (RSs) and synchronization signals (SSs) are defined as DL physical signals. An reference signal (RS), also called a pilot signal, is a signal with a predefined special waveform known to both a gNode B (gNB) and a UE. For example, cell specific RS, UE-specific RS (UE-RS), positioning RS (PRS), and channel state information RS (CSI-RS) are defined as DL RSs. The 3GPP LTE/LTE-A standards define uplink (UL) physical channels corresponding to REs carrying information originated from a higher layer, and UL physical signals which are used in the physical layer and correspond to REs which do not carry information originated from a higher layer. For example, physical uplink shared channel (PUSCH), physical uplink control channel (PUCCH), and physical random access channel (PRACH) are defined as UL physical channels, and a demodulation reference signal (DMRS) for a UL control/data signal, and a sounding reference signal (SRS) used for UL channel measurement are defined as UL physical signals.

In the disclosure, the PDCCH/PCFICH/PHICH/PDSCH refers to a set of time-frequency resources or a set of REs, which carry downlink control information (DCI)/a control format indicator (CFI)/a DL acknowledgement/negative acknowledgement (ACK/NACK)/DL data. Further, the PUCCH/PUSCH/PRACH refers to a set of time-frequency resources or a set of REs, which carry UL control information (UCI)/UL data/a random access signal.

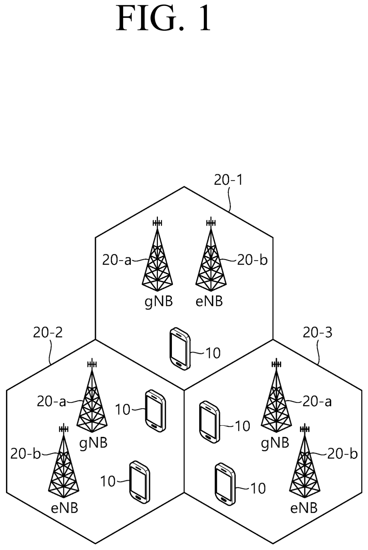

### FIG. 1 illustrates a wireless communication system.

Referring to FIG. 1, the wireless communication system includes at least one base station (BS). The BS includes a gNodeB (or gNB) 20a and an eNodeB (or eNB) 20b. The gNB 20a supports the 5G mobile communication. The eNB 20b supports the 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, other cells adjacent to the serving cell exist. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, the transmitter may be a part of the base station 20, and the receiver may be a part of the UE 10. In the uplink, the transmitter may be a part of the UE 10, and the receiver may be a part of the base station 20.

Meanwhile, a wireless communication system may be largely divided into a frequency division duplex (FDD) scheme and a time division duplex (TDD) scheme. According to the FDD scheme, uplink transmission and downlink transmission are performed while occupying different frequency bands. According to the TDD scheme, uplink transmission and downlink transmission are performed at different times while occupying the same frequency band. The channel response of the TDD scheme is substantially reciprocal. This means that the downlink channel response and the uplink channel response are almost the same in a given frequency domain. Accordingly, in the TDD-based radio communication system, there is an advantage that the downlink channel response can be obtained from the uplink channel response. In the TDD scheme, since uplink transmission and downlink transmission are time-divided in the entire frequency band, downlink transmission by the base station and uplink transmission by the UE cannot be performed simultaneously. In a TDD system in which uplink transmission and downlink transmission are divided in subframe units, uplink transmission and downlink transmission are performed in different subframes.

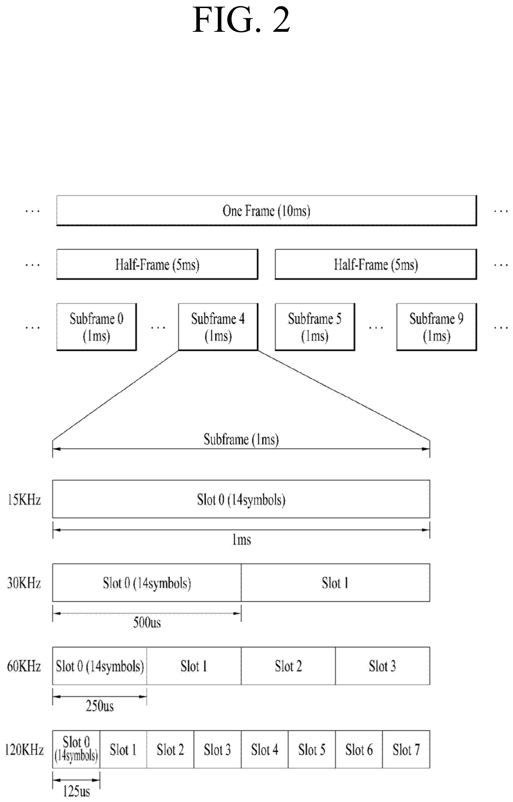

### FIG. 2 illustrates a structure of a radio frame used in NR.

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM(A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol).

### <Support of Various Numerologies>

With the development of wireless communication technology, multiple numerologies may be available to UEs in the NR system. For example, in the case where a subcarrier spacing (SCS) is 15 kHz, a wide area of the typical cellular bands is supported. In the case where an SCS is 30 kHz/60 kHz, a dense-urban, lower latency, wider carrier bandwidth is supported. In the case where the SCS is 60 kHz or higher, a bandwidth that is greater than 24.25 GHz is supported in order to overcome phase noise.

The numerologies may be defined by a cyclic prefix (CP) length and a subcarrier spacing (SCS). A single cell can provide a plurality of numerologies to UEs. When an index of a numerology is represented by µ, a subcarrier spacing and a corresponding CP length may be expressed as shown in the following table.

**[Table 2]**

| | Δf=2^{µ·}15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

In the case of a normal CP, when an index of a numerology is expressed by µ, the number of OLDM symbols per slot N^{slot}_{symb}, the number of slots per frame N^{frame,µ}ₛₗₒₜ, and the number of slots per subframe N^{subframe,µ}ₛₗₒₜ are expressed as shown in the following table.

**[Table 3]**

| µ | Δf=2^{µ}·15 [kHz] | N^{slot}_{symb} | N^{frame,µ}slot | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

In the case of an extended CP, when an index of a numerology is represented by µ, the number of OLDM symbols per slot N^{slot}_{symb}, the number of slots per frame N^{frame,fl}ₛₗₒₜ, and the number of slots per subframe N^{subframe,µ}ₛₗₒₜ are expressed as shown in the following table.

**[Table 4]**

| µ | SCS (15*2^{u}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

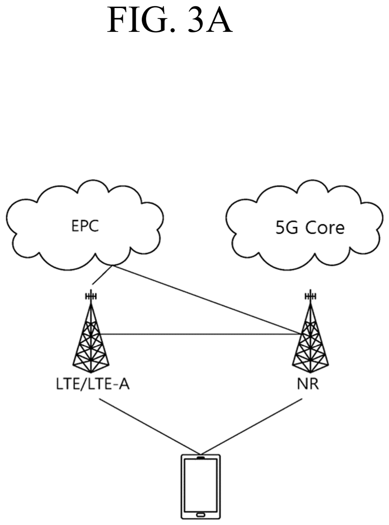

### FIGS. 3A to 3C illustrate exemplary architectures for a wireless communication service.

Referring to FIG. 3A, a UE is connected in dual connectivity (DC) with an LTE/LTE-A cell and a NR cell.

The NR cell is connected with a core network for the legacy fourth-generation mobile communication, that is, an Evolved Packet core (EPC).

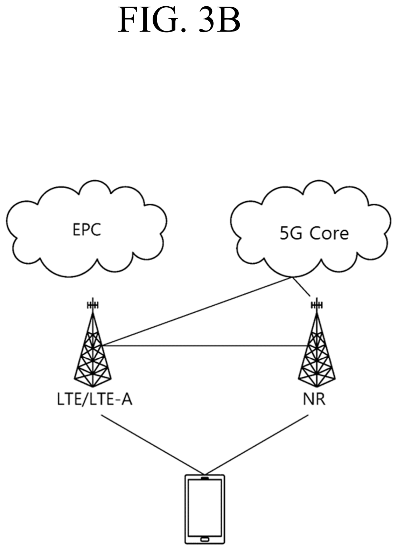

Referring to FIG. 3B, the LTE/LTE-A cell is connected with a core network for 5th generation mobile communication, that is, a 5G core network, unlike the example in FIG. 3A.

A service based on the architecture shown in FIGS. 3A and 3B is referred to as a non-standalone (NSA) service.

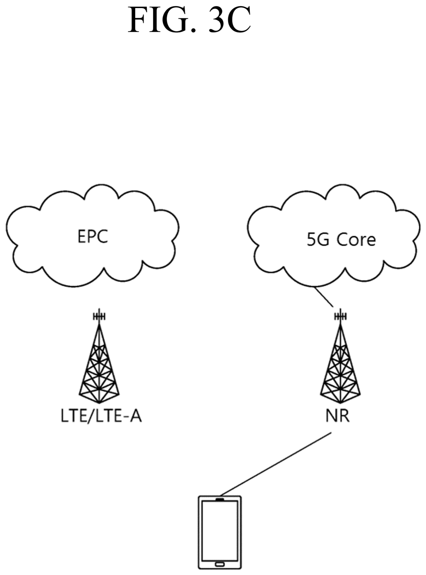

Referring to FIG. 3C, a UE is connected only with an NR cell. A service based on this architecture is referred to as a standalone (SA) service.

Meanwhile, in the above new radio access technology (NR), using a downlink subframe for reception from a base station and using an uplink subframe for transmission to the base station may be considered. This method may be applied to both paired and not-paired spectrums. A pair of spectrums indicates including two subcarriers for downlink and uplink operations. For example, one subcarrier in one pair of spectrums may include a pair of a downlink band and an uplink band.

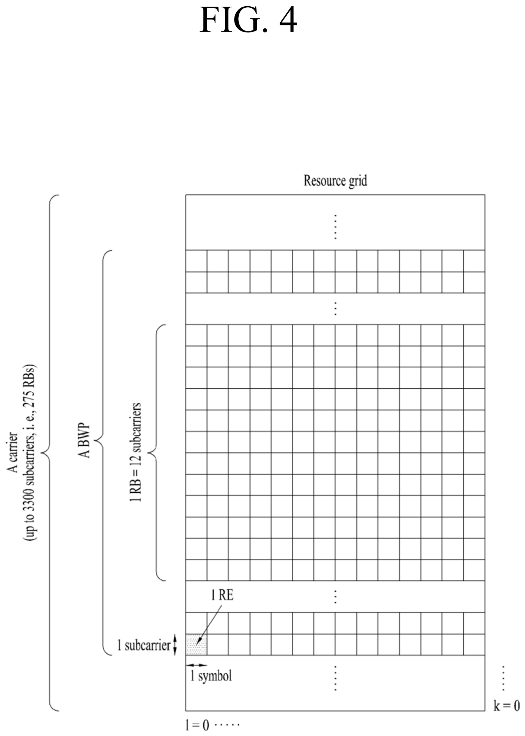

### FIG. 4 illustrates a slot structure of an NR frame.

A slot includes a plurality of symbols in the time domain. For example, in the case of the normal CP, one slot includes seven symbols. On the other hand, in the case of an extended CP, one slot includes six symbols. A carrier includes a plurality of subcarriers in the frequency domain. A resource block (RB) is defined as consecutive subcarriers (e.g., 12 consecutive subcarriers) in the frequency domain. A bandwidth part (BWP) is defined as a plurality of consecutive physical (P)RBs in the frequency domain and may correspond to one numerology (e.g., SCS, CP length, etc.). A UE may be configured with up to N (e.g., five) BWPs in both the downlink and the uplink. The downlink or uplink transmission is performed through an activated BWP, and only one BWP among the BWPs configured for the UE may be activated at a given time. In the resource grid, each element is referred to as a resource element (RE), and one complex symbol may be mapped thereto.

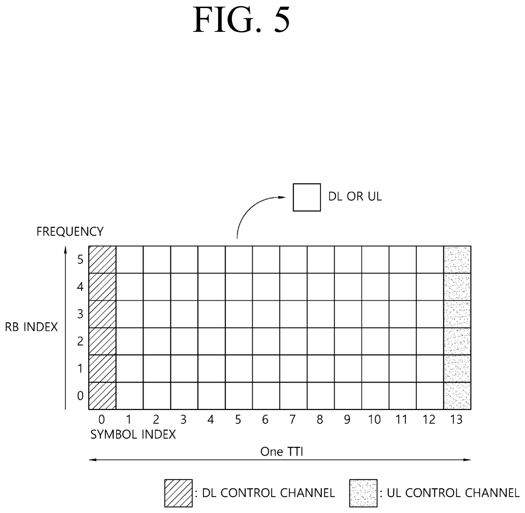

### FIG. 5 shows an example of a subframe type in NR.

Referring to FIG. 5, a TTI (Transmission Time Interval) may be called a subframe or a slot for NR (or new RAT). The subframe (or slot) shown in FIG. 5 can be used in a TDD system of NR (or new RAT) to minimize data transmission delay. As shown in FIG. 5, a subframe (or slot) includes 14 symbols. The symbol at the head of the subframe (or slot) can be used for a DL control channel and the symbol at the end of the subframe (or slot) can be used for a UL control channel. The remaining symbols can be used for DL data transmission or UL data transmission. According to this subframe (or slot) structure, downlink transmission and uplink transmission can be sequentially performed in one subframe (or slot). Accordingly, downlink data can be received in a subframe (or slot) and uplink ACK/NACL may be transmitted in the subframe (or slot).

Such a subframe (or slot) structure may be called a self-contained subframe (or slot).

Specifically, the first N symbols (hereinafter referred to as the DL control region) in a slot may be used to transmit a DL control channel, and the last M symbols (hereinafter referred to as the UL control region) in the slot may be used to transmit a UL control channel. N and M are integers greater than 0. A resource region between the DL control region and the UL control region (hereinafter referred to as a data region) may be used for DL data transmission or UL data transmission. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

When this subframe (or slot) structure is used, a time taken to retransmit data that has failed in reception may be reduced to minimize final data transmission latency. In such a self-contained subframe (or slot) structure, a time gap may be required in a process of transition from a transmission mode to a reception mode or from the reception mode to the transmission mode. To this end, some OFDM symbols when DL switches to UL in the subframe structure can be configured to a guard period (GP).

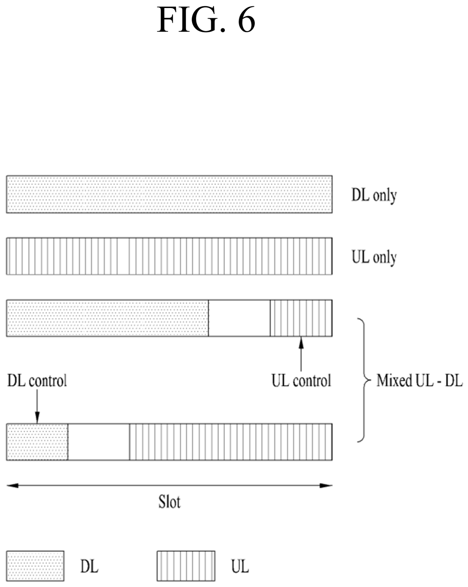

### FIG. 6 illustrates a structure of a self-contained slot.

In the NR system, the frame has a self-contained structure, in which all of a DL control channel, DL or UL data channel, UL control channel, and other elements are included in one slot. For example, the first N symbols (hereinafter referred to as a DL control region) in a slot may be used for transmitting a DL control channel, and the last M symbols (hereinafter referred to as an UL control region) in the slot may be used for transmitting an UL control channel. N and M are integers greater than 0. A resource region between the DL control region and the UL control region (hereinafter referred to as a data region) may be used for DL data transmission or UL data transmission. For example, the following configurations may be taken into account. The durations are listed in temporal order.
1. DL only configuration
2. UL only configuration
3. Mixed UL-DL configuration
   - DL region + Guard Period (GP) + UL control region
   - DL control region + GP + UL region
      DL region: (i) DL data region, (ii) DL control region + DL data region
      UL region: (i) UL data region, (ii) UL data region + UL control region

A PDCCH may be transmitted in the DL control region, and a PDSCH may be transmitted in the DL data region. A PUCCH may be transmitted in the UL control region, and a PUSCH may be transmitted in the UL data region. In the PDCCH, Downlink Control Information (DCI), for example, DL data scheduling information or UL data scheduling data may be transmitted. In the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A GP provides a time gap during a process where a gNB and a UE transition from the transmission mode to the reception mode or a process where the gNB and UE transition from the reception mode to the transmission mode. Part of symbols belonging to the occasion in which the mode is changed from DL to UL within a subframe may be configured as the GP.

### <Beam Management in NR>

The existing 3GPP NR beam management procedure can be divided into an initial access stage and a connection establishment stage. A terminal performing an initial access procedure configures it's initial transmit/receive (Tx/Rx) beam through a random access channel (RACH) procedure.

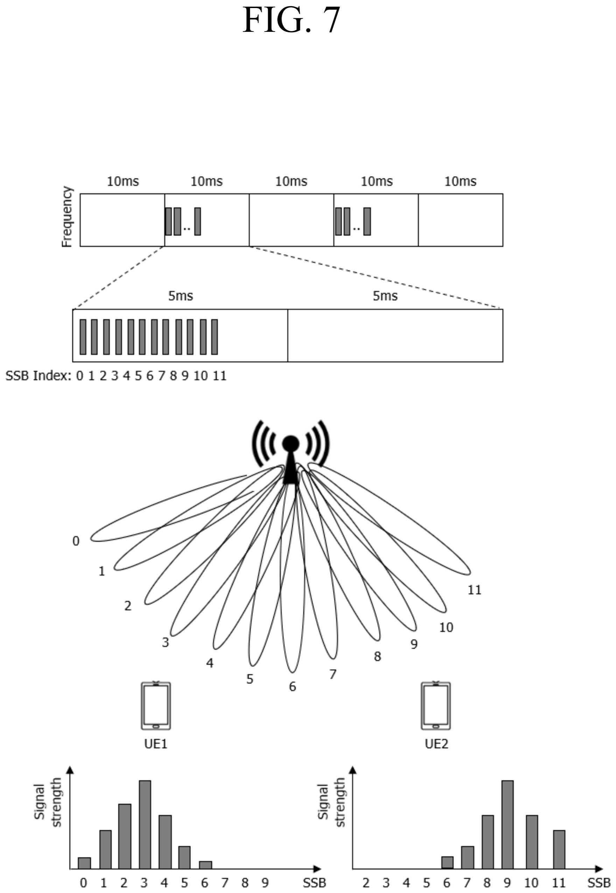

**FIG. 7** **illustrates an example of initial beam measurement and selection in NR.**

Referring to FIG. 7, in order to provide a base station transmit beam (gNB Tx beam) configuration to terminals without a cell connection (UE1/UE2), the base station periodically and repeatedly transmits synchronization signal blocks (SSBs), each mapped to beams in different directions. Within 5ms, a set of SSBs may be transmitted, and the SSB transmission may be repeated with a 20ms period. Specifically, the default value for initial cell selection may be 20ms.

A terminal selects a qualified SSB (e.g., suitable SSB) based on signal measurements of the periodically transmitted SSBs and may inform the base station of the selected Tx beam by transmitting a physical random access channel (PRACH) preamble mapped to the corresponding SSB. For example, based on signal strength measurement, terminals at different locations, i.e., UE1 selects an SSB with SSB index 3, and UE2 selects an SSB with SSB index 9, and UE1 and UE2 may each transmit a corresponding PRACH preamble for the selected SSB. Here, it is assumed that each SSB is beamformed in a specific direction.

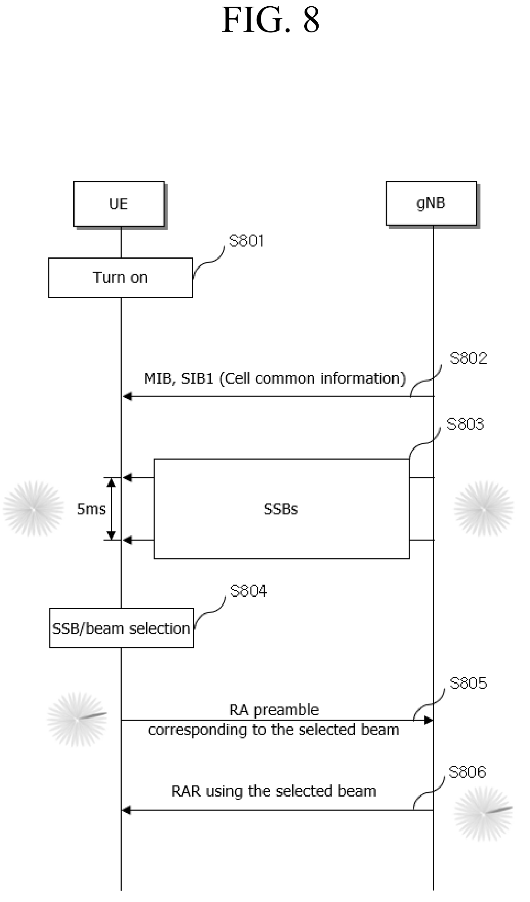

**FIG. 8** **illustrates an example of an initial access procedure between a terminal and a base station in NR.**

Referring to FIG. 8, after the terminal (UE) is powered on (S801), the UE receives cell-related parameter information (e.g., PRACH information corresponding to each SSB) required in the initial access stage through a system information message transmitted by the base station(gNB) (S802). The system information message includes a master information block (MIB) and a system information block 1 (SIB1) which contains cell common information.

After the terminal acquires the system information message, the terminal receives SSBs periodically transmitted from the base station S803. Then, the terminal measures the reference signal received power (RSRP) for the received SSBs. Among the measured RSRPs for N SSBs, that is, beams, the terminal selects one SSB (beam) having the highest/qualified value S804.

Thereafter, the terminal transmits a random access (RA) preamble belonging to a PRACH resource corresponding to the selected SSB (beam) to the base station S805. Through this, the terminal may inform the base station of the selected initial beam information.

The base station receives the RA preamble belonging to the PRACH resource corresponding to the selected SSB (beam) from the terminal and, in response, transmits a random access response (RAR) to the terminal using the selected SSB (beam) S806.

Meanwhile, because a base station does not know the location/beam information of a terminal that has just entered a cell, i.e., a terminal performing a contention based random access (CBRA) procedure, may configure up to 64 beams as cell common beams for a disconnected terminal, and the terminal performs an operation of sequentially measuring all beams to find an optimal beam for its location. As the number of beams in a cell increases, this not only causes delay in beam selection and cell connection, but may also increase power consumption at the terminal because the terminal must measure a large number of beams.

To address the foregoing problem, the base station may map a wide beam to an SSB to identify an approximate location/beam direction of an initially connecting terminal and, after the terminal connects to the cell. The base station may configure a narrow beam through a beam refinement operation. However, although a narrow beam, while providing a high data rate to the terminal, is sensitive to the terminal's movement or environmental changes, and thus disconnection may easily occur. To address this, the base station, by allocating CSI resource (CSI-RS/SSB) to which candidate beams are mapped, to the terminal in a UE-specific manner, has the terminal continuously measure the surrounding beam strength and report the measurement results to the base station. This may be configured by the base station through a CSI resource configuration and a CSI report configuration.

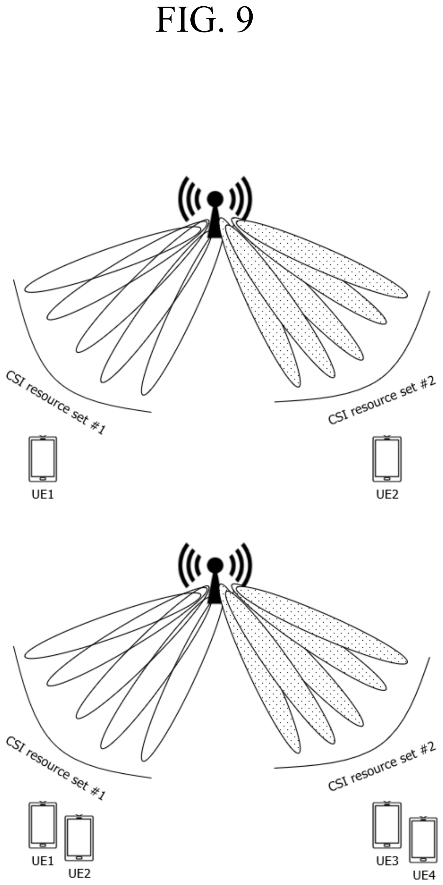

**FIG. 9** **illustrates an example of candidate beam configuration in NR.**

A terminal that has received a beam reporting configuration performs reporting based on the base station's configuration by measuring a reference signal (RS) allocated to it. This conforms to the CSI framework defined in 3GPP. However, this UE-specific CSI configuration method has a drawback in that as the number of terminals in a cell increases, the RS resources allocated per terminal increase rapidly. To alleviate this resource overhead problem, the base station may choose a method of allocating the same candidate beam, that is, the same CSI resource, to terminals in similar locations, as shown in FIG. 9. This may be called a UE group-specific CSI resource configuration. However, when terminals with different mobilities share the same resource, an issue arises in which a new candidate beam resource must be allocated to a terminal that moves out of the corresponding resource area. When a minimum number of candidate beams are allocated to reduce resource overhead for terminals with high/medium mobility, the terminal will experience frequent RRC reconfigurations, and reconfiguring candidate beams through RRC causes a relatively large delay, which may be a cause of beam disconnection. To alleviate this issue, the base station may operate the candidate beams by appropriately increasing the number of beams belonging to a CSI resource set. However, from the terminal's perspective, this causes a trade-off, as the burden of measurement increases due to the increased number of beams.

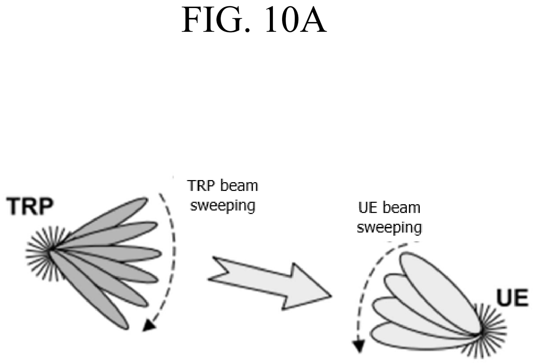

**FIGS. 10A to 10C** **illustrate three procedures for beam management in NR.**

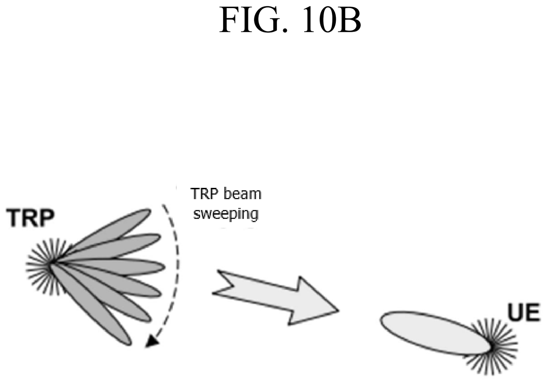

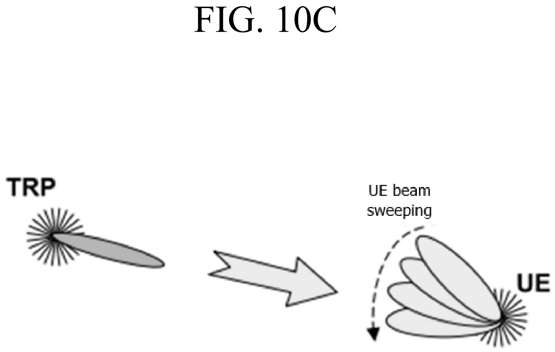

Beam management in NR may be defined as being divided into three procedures from the perspective of the physical-layer procedures. FIG. 10A illustrates procedure 1 (P1), FIG. 10B shows procedure 2 (P2), and FIG. 10C shows procedure 3 (P3), respectively. P1 is an operation that finds a transmit/receive beam pair (Tx/Rx beam pair) by performing TRP (transmission reception point) beam sweeping and UE beam sweeping simultaneously, similar to the beam configuration method for a terminal performing the previously described initial access procedure. A terminal that has entered connected mode recognizes that the beams configured through a candidate beam (i.e., CSI resource set) configuration from the base station will be swept, and first performs a signal strength measurement for a TRP beam. When the terminal's TRP beam is selected through P2, the base station then transmits the selected single beam repeatedly through P3. The terminal may select a UE beam while performing UE beam sweeping. Which beam the UE selects in this operation may be left to the terminal implementation. The aforementioned operation may be applied to both downlink (DL) and uplink (UL).

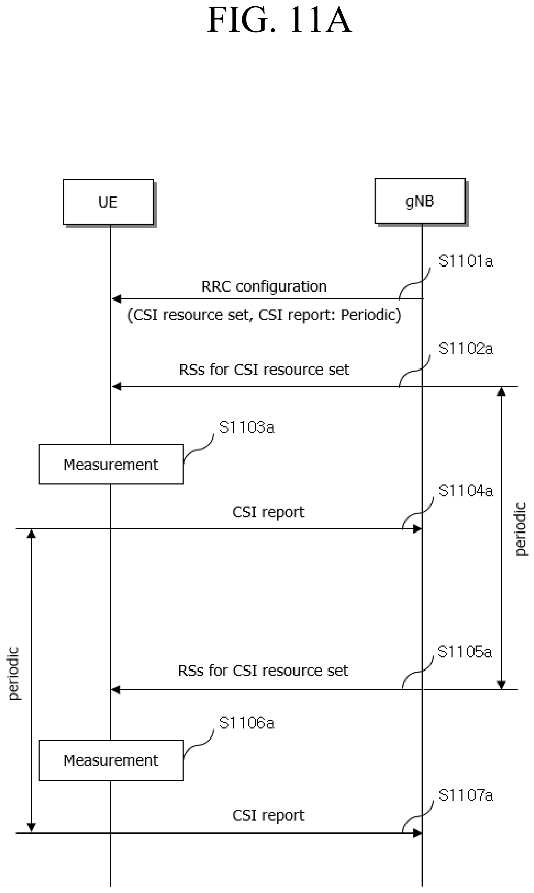

**FIGS. 11A to 11C** **illustrate examples of beam reporting procedures in NR.**

For beam sweeping, when a candidate beam is configured - , i.e., when a CSI resource set is configured - the base station provides reference signal (RS) resource information to the terminal, and beam information is implicitly indicated by being mapped to the RS resources, That is, instead of explicitly informing the terminal of the actual beam index, the base station allows the terminal to recognize the beam information mapped by the base station through index information implicitly mapped as RS information using a resource indicator (RI). This is configured using the 3GPP CSI framework. The terminal measures the strength of the RS for the resource configured by the base station and implicitly reports RSRP information for the best four beams (RI) to the base station. The method for reporting the measurement results also follows the base station's RRC configuration, and 3GPP specifies that the configuration is performed by one of the following three methods.
- periodic reporting
- aperiodic reporting
- semi persistent reporting

FIG. 11A illustrates a periodic CSI reporting scheme, which is triggered through RRC configuration. Specifically, the terminal receives an RRC configuration message from the base station, and the RRC configuration message includes configuration information for CSI-related RS resources and the reporting method, i.e., CSI resource set information and information that the CSI report is periodic (S1101a). Based on the received RRC configuration message, the terminal then receives RSs that are transmitted periodically (S1102a and S1105a) and measures the signal strength of the beams based on the received RSs (S1103a and S1106a). Then, the terminal periodically reports the measured result (value) to the base station (S1104a and S1107a).

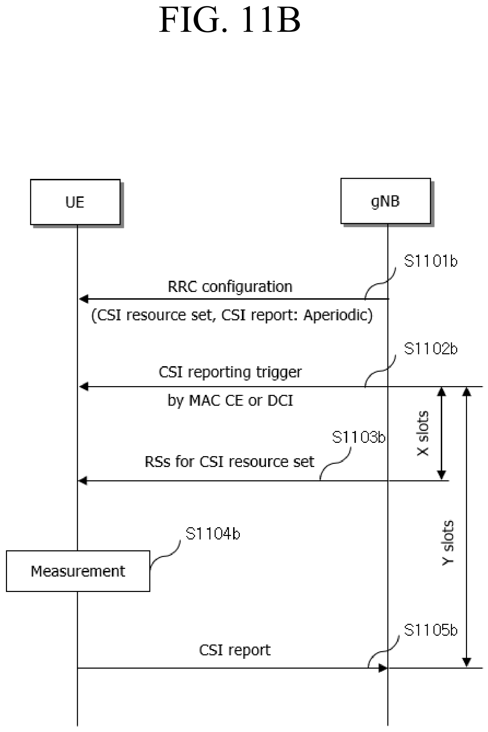

FIG. 11B illustrates an aperiodic CSI reporting scheme, in which even when CSI-related RS resources and reporting methods are configured via an RRC configuration message, beam measurements based on RS are not performed without a trigger message (or information) from a lower layer. Specifically, the terminal receives an RRC configuration message from the base station, that includes configuration information for CSI-related RS resources and reporting methods, i.e., CSI resource set information and information that the CSI report is aperiodic (S1101b). A CSI report trigger is then provided through a medium access control (MAC) control element (CE) or downlink control information (DCI). The terminal receives CSI report trigger information from the base setation where a trigger indication is included via MAC CE or DCI (S1102b). The terminal receives RSs that are transmitted once based on the received trigger indication (S1103b). The RS transmission for the CSI resource set may occur after a specific time (e.g., X slots) following the transmission of the CSI report trigger information. The terminal measures the signal strength for the beams based on the received RSs (S1104b). Then, the terminal reports the measured result (value) once to the base station (S1105b). The CSI report may also be transmitted after a specific time (e.g., Y slots) following receipt of the CSI report trigger information.

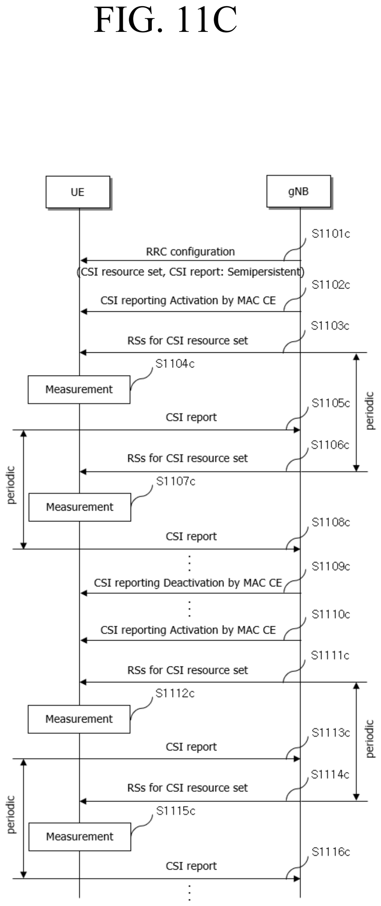

FIG. 11C illustrates a semi-persistent reporting scheme, which operates as an intermediate method between periodic and aperiodic reporting. In this scheme, a terminal that receives configuration for CSI-related RS resources and reporting methods via an RRC configuration message performs periodic CSI reporting only when activated by a MAC CE and continues such reporting until a deactivation message (or, information) is received. Specifically, the terminal receives an RRC configuration message from the base station, that includes configuration information for CSI-related RS resources and reporting methods, i.e., CSI resource set information and information indicating that the CSI report is semi-persistent (S1101c), and CSI report activation is provided through a MAC CE. The terminal receives CSI report activation information including an activation indication from the base station via MAC CE (S1102c and S1110c), receives periodically transmitted RSs based on the received activation indication (S1103c, S1106c, S1111c), and S1114c, and measures the signal strength for the beams based on the received RSs (S1104c, S1107c, S1112c, and S1115c). Then, the terminal periodically reports the measured result (value) to the base station (S1105c, S1108c, S1113c, and S1116c). After CSI reporting is activated, when CSI report deactivation information including a deactivation indication is received from the base station via MAC CE (S1109c), the terminal stops CSI reporting.

Recently, in recent 3GPP discussions, the application of AI/ML models has been considered to improve delays in such beam search/measurement latency and to reduce terminal power consumption, and a study time has been initiated to evaluate feasibility and potential impacts on specifications.

A list of terminologies applied to AI/ML is being discussed as shown in Table 6 below.

**[Table 6]**

| Terminology | Description |
|---|---|
| Data collection | A process of collecting data by the network nodes, ma nagement entity, or UE for the purpose of AI/ML mod el training, data analytics and inference |
| AI/ML Model | A data driven algorithm that applies AI/ML techniques to generate a set of outputs based on a set of inputs. |
| AI/ML model training | A process to train an AI/ML Model [by learning the in put/output relationship] in a data driven manner and ob tain the trained AI/ML Model for inference |
| AI/ML model Inference | A process of using a trained AI/ML model to produce a set of outputs based on a set of inputs |
| AI/ML model validation | A subprocess of training, to evaluate the quality of an AI/ML model using a dataset different from one used for model training, that helps selecting model paramet ers that generalize beyond the dataset used for model t raining. |
| AI/ML model testing | A subprocess of training, to evaluate the performance o f a final AI/ML model using a dataset different from o ne used for model training and validation. Differently f rom AI/ML model validation, testing does not assume subsequent tuning of the model. |
| UE-side (AI/ML) model | An AI/ML Model whose inference is performed entirel y at the UE |
| Network-side (AI/ML) model | An AI/ML Model whose inference is performed entirel y at the network |
| One-sided (AI/ML) mod el | A UE-side (AI/ML) model or a Network-side (AI/ML) model |
| Two-sided (AI/ML) mo del | A paired AI/ML Model(s) over which joint inference is performed, where joint inference comprises AI/ML Inf erence whose inference is performed jointly across the UE and the network, i.e, the first part of inference is f irstly performed by UE and then the remaining part is performed by gNB, or vice versa. |
| AI/ML model transfer | Delivery of an AI/ML model over the air interface, eit her parameters of a model structure known at the recei ving end or a new model with parameters. Delivery m ay contain a full model or a partial model. |
| Model download | Model transfer from the network to UE |
| Model upload | Model transfer from UE to the network |
| Federated learning / fed erated training | A machine learning technique that trains an AI/ML mo del across multiple decentralized edge nodes (e.g., UEs , gNBs) each performing local model training using loc al data samples. The technique requires multiple intera ctions of the model, but no exchange of local data sam ples. |
| Offline field data | The data collected from field and used for offline train ing of the AI/ML model |
| Online field data | The data collected from field and used for online traini ng of the AI/ML model |
| Model monitoring | A procedure that monitors the inference performance o f the AI/ML model |
| Supervised learning | A process of training a model from input and its corre sponding *labels.* |
| Unsupervised learning | A process of training a model without labelled data. |
| Semi-supervised learnin g | A process of training a model with a mix of labelled d ata and unlabelled data |
| Reinforcement Learning (RL) | A process of training an AI/ML model from input (a.k. a. state) and a feedback signal (a.k.a. reward) resultin g from the model's output (a.k.a. action) in an environ ment the model is interacting with. |
| Model activation | enable an AI/ML model for a specific function |
| Model deactivation | disable an AI/ML model for a specific function |
| Model switching | Deactivating a currently active AI/ML model and activ ating a different AI/ML model for a specific function |

3GPP has decided to conduct a study on the specification impact of beam result reporting methods in relation to data collection for performing AI model training on the UE side during beam management procedures.

Meanwhile, the typical beam management operations in NR results in increased system overhead and increased power consumption at the terminal as the number of beams and the number of terminals increases. In addition, for a terminal in the initial cell access stage, a delay in cell access may occur because the terminal must measure all beams before selecting an initial beam. To improve this problem, the use of an AI/ML model that predicts the strength of all beams based on measurement of only a subset of beams is being proposed, but detailed procedures or methods for such an approach have not yet been defined. This specification proposes a scheme that enables the network (NW) to efficiently collect beam information from the terminal (e.g., user equipment: UE) in order to train a corresponding AI/ML model for performing AI/ML-based beam management.

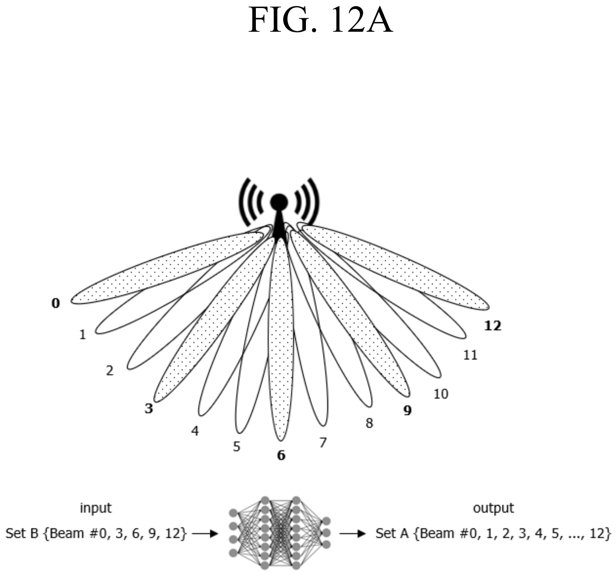

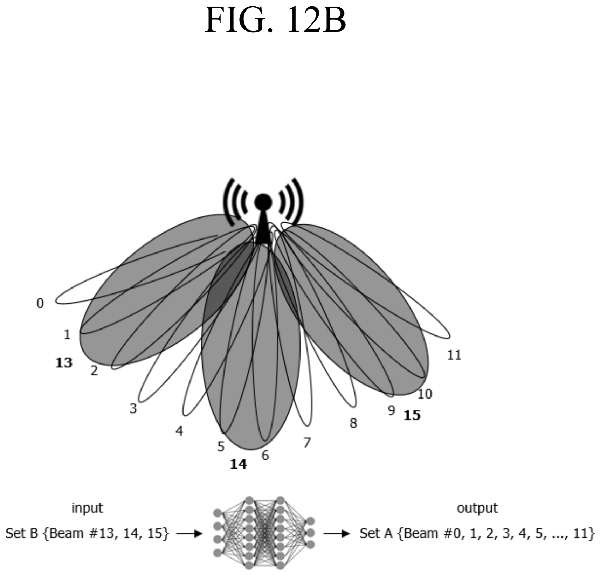

**FIGS. 12A** **and** **12B** **illustrate an example of beam measurement and spatial domain beam prediction using AI/ML.**

Currently, 3GPP RAN (radio access network) WG1 (working group 1) has initiated a study on 'AI/ML for beam management' and has agreed to discuss spatial DL beam prediction (BM-Case1) and temporal DL beam prediction (BM-Case2) as sub-use cases. This study enables predicting the strength of a beam for Set A based on measurements of beams belonging to Set B. The case of spatial DL beam prediction is illustrated in FIGS. 12A and 12B, where FIG. 12A illustrates the case in which Set B is a subset of Set A, and FIG. 12B illustrates the case in which Set B is composed of a wide beam and Set A is composed of a narrow beam, i.e., the two sets are composed of different beams. In the case of temporal DL beam prediction, in addition to i) the case where Set B is a subset of Set A and ii) the case where Set A and Set B are different sets for spatial DL beam prediction, iii) the case where Set A and Set B are composed of the same set is also considered. Temporal DL beam prediction involves predicting future beam information based on past beam measurement information, and a method of applying this to iii) the case where Set A and Set B are composed of the same set after predicting the entire beam based on spatial DL beam prediction could be considered. For these reasons, i) the case where Set B is a subset of Set A and ii) the case where Set A and Set B are different sets for spatial DL beam prediction are expected to serve as basic beam prediction methods.

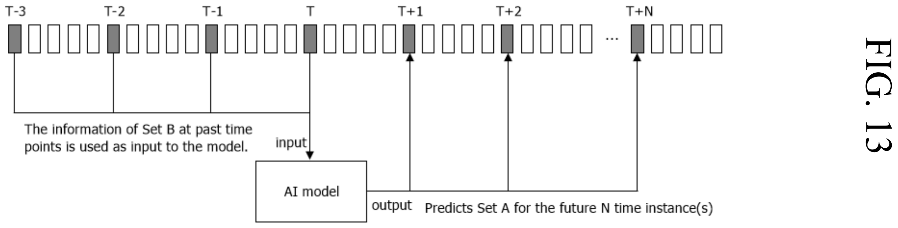

**FIG. 13** **illustrates an example of temporal domain beam prediction using AI/ML.**

The temporal domain beam prediction of BM-Case2, as shown in FIG. 13, is defined as an operation of predicting a beam result at a specific point in the near future (i.e., output) based on past beam measurement information (i.e., input). At this time, the beam set used as input and the beam set derived as output may consider the following cases, as previously explained, i) the case where Set B is a subset of Set A, ii) the case where Set A and Set B are different sets, and additionally, iii) the case where Set A and Set B are composed of the same set.

Meanwhile, to perform beam management using an AI/ML model, a model training process must be performed beforehand. For the terminal (e.g., user equipment: UE) to perform model training for beam management on the UE side, the terminal needs to be configured with downlink reference signals (DL RSs) for training by the base station. RAN1 agreed to consider the following two options as methods for providing such configuration.
Option 1. Data collection initiated/triggered by configuration from the network (NW)
Option 2. Data collection requested by the terminal (e.g., user equipment: UE)

Although the terminal can initiate training based on the two options described above, there has been no concrete discussion on how the base station should provide the data for training or on how long the terminal should continue data collection. In general, model training may be terminated when the model performance reaches a target value. However, even with continuous training, the model performance may fail to reach a satisfactory level, or in some cases, continuing the training itself may degrade the overall system performance. In such situations, the terminal or the network (NW) needs a procedure to terminate the model training or release the related configuration. Nevertheless, no discussion has been made on this aspect so far.

Based on the foregoing discussion, the present disclosure proposes a scheme for configuring data transmission and a method for determining termination of data transmission for effective UE-side model training when performing beam management using an AI/ML model.

Furthermore, the present disclosure proposes a scheme for a data collection procedure for model training, in which, when the terminal (e.g., user equipment: UE) requires model-training-related data collection to perform communication using an AI/ML model, the terminal requests the base station to transmit data for the data collection, or receives a message from the base station indicating the start of data transmission for model training. The terminal then performs model training through data collection by receiving the transmitted data using resources configured by the base station, and, when a specific event is satisfied, transmits a data-collection termination message to the base station to terminate the data collection. More specifically, the present disclosure defines a step of determining the termination timing of data collection for model training, as well as message definitions and terminal/base-station operations associated therewith.

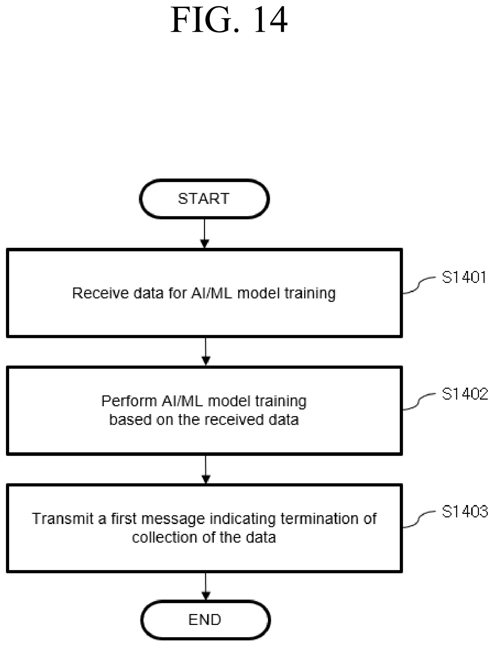

**FIG. 14** **illustrates an operation method of a terminal according to an embodiment of the disclosure.**

Referring to FIG. 14, the terminal receives data for AI/ML model training from the base station (S1401), and performs AI/ML model training based on the received data (S1402). After performing the AI/ML model training, the terminal transmits a first message to the base station, the first message indicating termination of collection of the data (S1403). Here, the first message may be for deactivating transmission of the data for AI/ML model training.

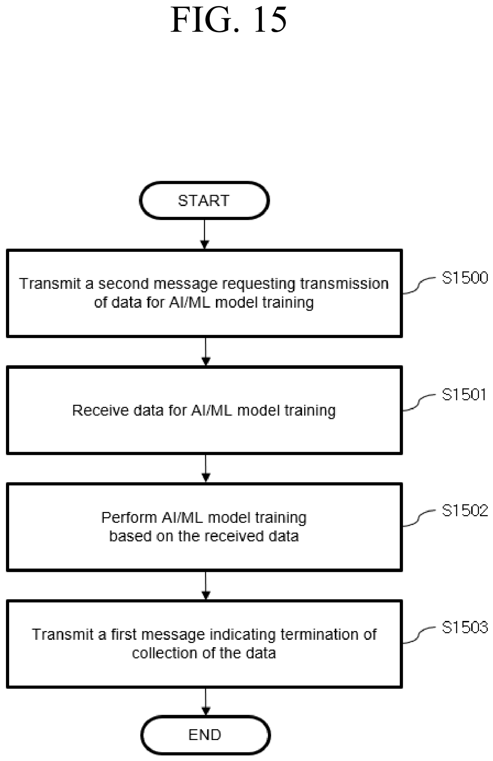

**FIG. 15** **illustrates an operation method of a terminal according to another embodiment of the disclosure.**

In FIG. 15, in addition to the embodiment of FIG. 14, the procedure in which the terminal transmits a request for transmission of data for AI/ML model training to the base station is illustrated.

That is, when the terminal decides to start data collection for AI/ML model training, the terminal transmits a request message (a second message) to the base station to request transmission of the data required for the data collection (S1500). Here, the second message may include at least one of the following pieces of information i) to iii):
i) Functionality/model ID
ii) An indicator indicating the purpose of data collection corresponding to the functionality/model ID (e.g., model training)
iii) Minimum/maximum/preferred time (timer or time instance) information and/or data volume/size information required for data collection for model training

Upon receiving the second message from the terminal, the base station is required to start transmitting data to the terminal based on the received information. Resources for transmitting the requested data may have already been configured for the terminal during the functionality/model identification process, or, upon receipt of the second message, an additional configuration message may be sent from the base station to the terminal. In other words, the transmission of the second message from the terminal to the base station may indicate a request for the base station to configure resources for transmitting data for model training, or, if such resources have already been configured, a request to activate those resources. After transmitting the request message, i.e., the second message, the terminal can start the corresponding model training. That is, after transmitting the second message requesting transmission of data for AI/ML model training, the terminal receives the data for AI/ML model training from the base station (S1501), and performs AI/ML model training based on the received data (S1502). After performing the AI/ML model training, the terminal transmits a first message to the base station to indicate termination of collection of the data (S1503).

Meanwhile, after the terminal transmits the request message, i.e., the second message, to the base station, the base station may transmit a response message to the second message, and the terminal may be defined to expect the reception of such a response.

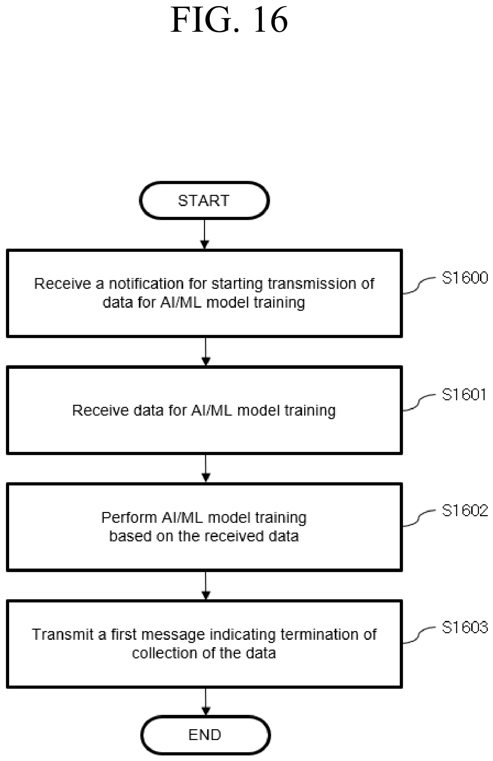

**FIG. 16** **illustrates an operation method of a terminal according to another embodiment of the disclosure.**

In addition to the embodiment of FIG. 14, FIG. 16 illustrates the procedure of the terminal for receiving a notification indicating the start of data transmission for AI/ML model training from the base station.

That is, the terminal receives, from the base station, a notification indicating the start of data transmission for AI/ML model training (S1600). Thereafter, the terminal receives data for AI/ML model training from the base station (S1601) and performs AI/ML model training based on the received data (S1602). After performing the AI/ML model training, the terminal transmits a first message to the base station to indicate termination of collection of the data (S1603).

The notification of the start of data transmission for AI/ML model training from the base station may be transmitted and received without the terminal having transmitted the second message requesting transmission of data for AI/ML model training, as described in FIG. 15.

In addition, the notification of the start of data transmission for AI/ML model training may be provided through a configuration message associated with data for a specific model training. For example, if activation of resources for transmitting data for a specific model training is performed through such a configuration message, it may indicate the start of data transmission for model training at the terminal.

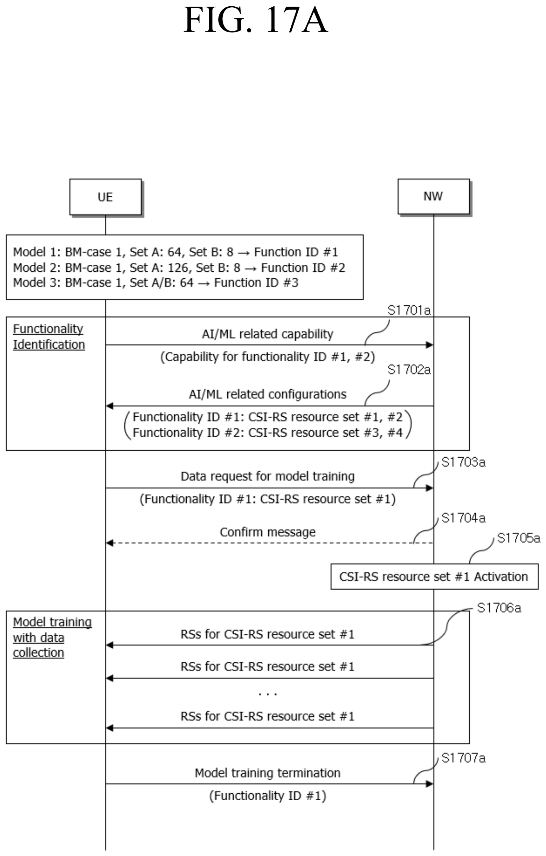

**FIGS. 17A to 17B** **illustrate procedures between a terminal and a base station according to embodiments of the disclosure.**

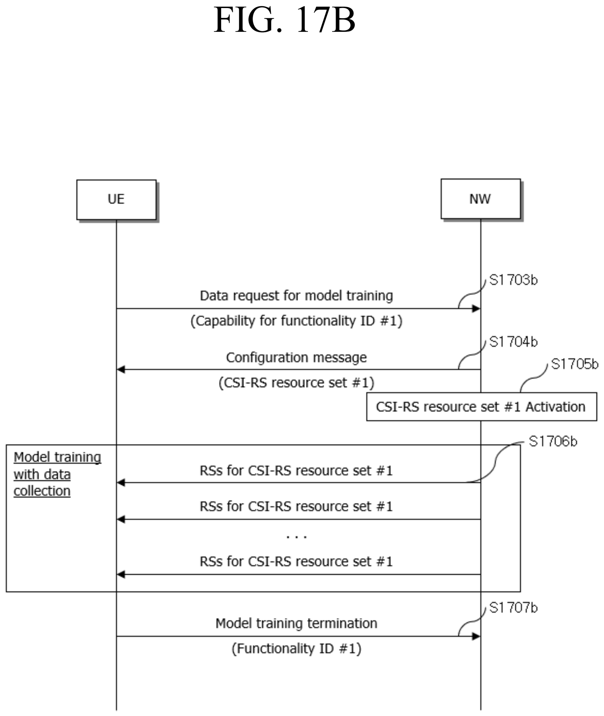

FIGS. 17A and 17B illustrate procedures of data collection for model training according to embodiments. FIG. 17A illustrates a procedure of initiating data collection by a request from the terminal, and FIG. 17B illustrates a procedure of initiating data collection by a configuration from the base station.

In FIG. 17A, it is assumed that the terminal can be configured with the following three models:
Model 1: BM-case 1, Set A: 64, Set B: 8 → Functionality ID #1
Model 2: BM-case 1, Set A: 126, Set B: 8 → Functionality ID #2
Model 3: BM-case 1, Set A/B: 64 → Functionality ID #3

Referring to FIG. 17A, the terminal transmits AI/ML-related capability information to the base station (i.e., the NW (network)) at S1701a and receives AI/ML-related configuration(s) from the NW based on this information at S1702a. For example, the terminal may transmit capability information for Functionality IDs #1 and #2. Upon receiving this information, the base station transmits AI/ML-related configuration(s) to the terminal based on the received information.

The process above may be referred to as functionality identification or model identification. Here, the terminal is assumed to be capable of performing AI/ML-based beam management, and the AI/ML-related capability information may include functionality/model IDs and associated auxiliary information, which are transmitted to the base station. Based on the AI/ML-related capability information received from the terminal, the base station may transmit beam information (e.g., CSI-RS resource configuration) for Set A/B required for model training, allowing the terminal to receive at least one AI/ML-related configuration. In FIG. 17A, the following AI/ML-related configurations are illustrated:
Functionality ID #1: CSI-RS resource sets #1 and #2
Functionality ID #2: CSI-RS resource sets #3 and #4

In this case, the data request message may request activation or initiation of one configuration corresponding to a configured functionality/model. Referring to FIG. 17A, the terminal transmits a data request for model training, including information related to one configuration corresponding to the configured functionality/model (S1703a). For example, the data request message for model training may include information on "Functionality ID #1: CSI-RS resource set #1."

In addition, after the terminal transmits the data request message, an acknowledgment message from the base station may be defined, and the terminal may expect such a response. In this case, the base station transmits an acknowledgment message in response to the data request message sent by the terminal (S1704a).

Alternatively, even when the terminal has transmitted AI/ML-related capability information, if the terminal has not received related configuration information from the base station, then as a response to the data request message from the terminal, the base station may transmit a configuration message indicating resource information for data transmission. In this case, the data request message transmitted by the terminal may indicate that the terminal requests configuration of the resources for data transmission required for model training. Referring to FIG. 17B, the terminal transmits a data request message for model training including AI/ML-related capability information to the base station (i.e., the NW) (S 1703b), and receives a configuration message including AI/ML-related configurations from the NW (S1704b). For example, the terminal may transmit capability information for Functionality ID #1, and the base station may transmit a configuration message including information on CSI-RS resource set #1 based on the received information.

Thereafter, the base station, i.e., the NW, activates resources for data transmission for model training. That is, CSI-RS resource set #1 is activated (S1705a, S1705b) and data transmission is performed using the activated resources (S1706a, S1706b). Here, the data transmission refers to repeated transmission of RSs of CSI-RS resource set #1. The terminal performs model training using the data collected from the base station, and upon completion of model training, the terminal instructs the base station to terminate model training (S1707a, S1707b). In this case, the message indicating termination of model training may include the functionality ID, e.g., information corresponding to Functionality ID #1.

The present disclosure further proposes that, when the terminal performing model training satisfies any of the following events (1-4), the terminal determines to terminate data collection for the model:
1. The terminal determines that the performance of the model has exceeded a certain threshold while model training is being performed.
2. The performance of the model does not exceed a certain threshold within a predefined time interval (timer) after model training has begun.
3. The base station terminates the provision of data to the terminal.
4. The data collection duration (timer) requested or configured by the terminal expires.

For Events 1 and 2, the value of the threshold and the timer applied to the time interval/period may be configured by the base station. It is preferable that such configuration be performed per functionality/model, as indicated by the terminal. Here, the threshold for Event 1 and Event 2 may be the same or different. If defined differently, the threshold for Event 2 should preferably be smaller than that for Event 1. The timer parameter among the above may also override the value included in the terminal's data request message.

The event parameters above may be configured from the base station to the terminal during the functionality/model identification procedure, or may be configured through a confirmation/configuration message transmitted by the base station in response to the terminal's data request message. Alternatively, if the base station transmits a configuration message related to data for model training without receiving a data request message from the terminal, the event parameters may also be included in such a configuration message.

The timers defined for Event 2 and Event 4 may be identical or different parameters.

The timers proposed in the events may also be defined based on various factors for measuring the total amount of data, such as data volume, size, or time instance. Applying different types of parameters equivalent to total data amount/time for model training may be regarded as the same technique proposed in the present disclosure.

A terminal that determines to terminate model training according to Event 1 or Event 2 may transmit, to the base station, a message indicating that model training has ended, in order to indicate that further data transmission from the base station to the terminal is no longer necessary. This message may include at least one of the following:
- Functionality/model ID;
- An indicator indicating the reason for model training termination.

Here, the reason for model training termination may be "training success" in the case of Event 1, or "training failure" in the case of Event 2.

Meanwhile, the message indicating termination of model training may be defined to be transmitted from the base station to the terminal according to Event 3 or Event 4. In the case of Event 4, termination of model training may be implicitly recognized without message transmission, and data collection/provision may be deactivated accordingly. If necessary, a termination message may be transmitted from the base station to the terminal, or from the terminal to the base station.

In the following, terminal and base station operations for performing model training based on data collection are described respectively, based on Events 1 through 4 above.

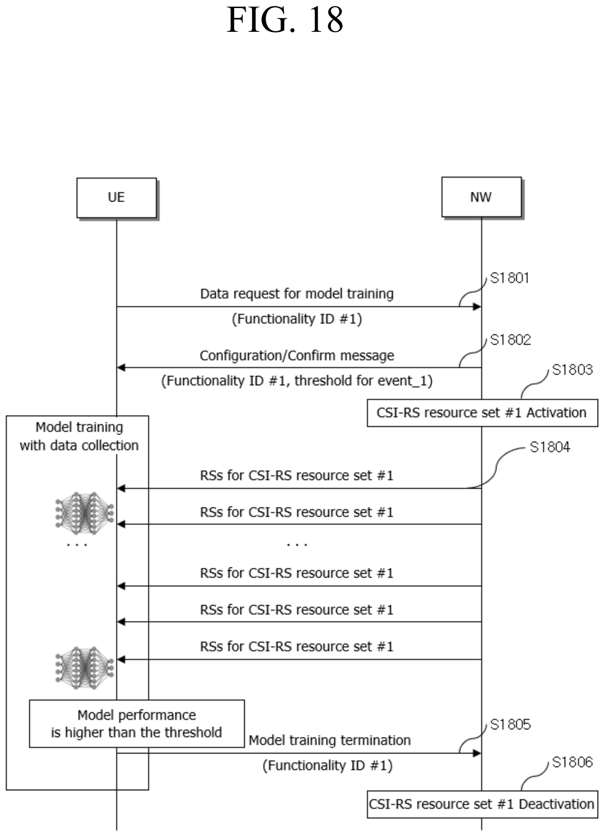

**FIG. 18** **illustrates a procedure between a terminal and a base station for event-based model training according to an embodiment of the disclosure.**

FIG. 18 illustrates a procedure between the terminal and the base station when at least Event 1 is configured.
- Event 1: A case where the terminal determines that the performance of the model exceeds a certain threshold while performing model training.

Hereinafter, referring to FIG. 18, the terminal operation is described in detail.

The terminal receives, from the base station, a message including a notification for starting data transmission for model training or including data-related configuration information (S1802). The message may include an event parameter for terminating the model training (e.g., Event 1) and/or a related threshold parameter (e.g., a threshold value). For example, the configuration/confirmation message may be received with information on Functionality ID #1, Event 1 information, and threshold information for Event 1.

Before receiving the message including the notification for starting data transmission for model training or the data-related configuration information, the terminal may optionally transmit a message requesting activation of data transmission for model training to the base station (S1801). For example, the data request message for model training may include information on Functionality ID #1.

Subsequently, the terminal receives the data transmitted by the base station (S1804) and performs model training based on the received data. Here, receiving the data means repeatedly receiving RSs of the activated CSI-RS resource set #1. While performing the model training, the terminal may periodically evaluate the performance of the model, and when the model performance reaches the threshold received from the base station (i.e., when Event 1 is satisfied), the terminal determines to terminate the model training.

When the terminal determines that the model training should be terminated, the terminal transmits, to the base station, a message indicating that the model training has been terminated (S1805). For example, the model-training termination message may include information on Functionality ID #1.

Hereinafter, referring to FIG. 18, the base station operation is described in detail.

The base station transmits to the terminal a message including a notification for starting data transmission for model training or including data-related configuration information (S1802). The message may include an event parameter for terminating the model training (e.g., Event 1) and/or a related threshold parameter (e.g., a threshold value). For example, the configuration/confirmation message may be transmitted with information on Functionality ID #1, Event 1 information, and threshold information for Event 1.

Before transmitting the message including the notification for starting data transmission for model training or the data-related configuration information, the base station may optionally receive, from the terminal, a message requesting activation of data transmission for model training (S1801). For example, the data request message for model training may include information on Functionality ID #1.

Subsequently, the base station activates the data transmission resources for model training. That is, the base station activates CSI-RS resource set #1 (S1803) and performs the data transmission (S1804). Here, performing the data transmission means repeatedly transmitting RSs of the activated CSI-RS resource set #1. In the case of model training for beam management, the base station may periodically transmit beams through the configured CSI-RS.

When the termination of the terminal's model training is determined, a message indicating the termination of the model training is received from the terminal (S1805). For example, the model training termination message may be received including information on Function ID #1. When the model-training termination message is received from the terminal, the base station deactivates the data transmission resources for model training (S1806). That is, the base station deactivates CSI-RS resource set #1 and stops the transmission of the corresponding data.

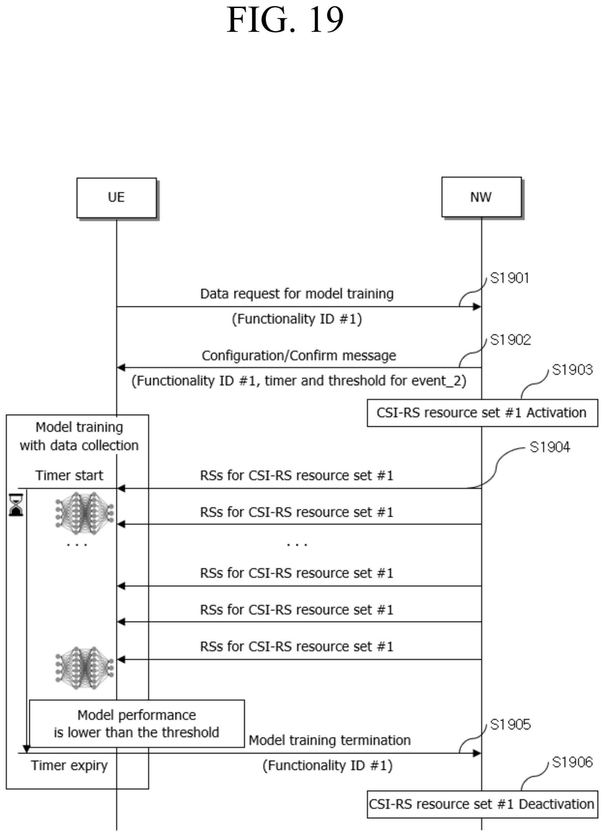

**FIG. 19** **illustrates a procedure between a terminal and a base station for event-based model training according to another embodiment of the disclosure.**

FIG. 19 illustrates a procedure between the terminal and the base station when at least Event 2 is configured.
- Event 2: A case where the performance of the model does not exceed a certain threshold within a predetermined time interval (Timer) after the model training has started.

Event 2 may operate in the same manner as Event 1 operating together with a specific timer. If Event 1 is configured to operate with a timer, the terminal checks whether the performance meets the threshold while the timer is running, and if the threshold is satisfied, the terminal may terminate the model training even before the timer expires. If the timer expires, the terminal may notify the base station that the model training has been terminated.

Hereinafter, referring to FIG. 19, the terminal operation is described in detail.

The terminal receives, from the base station, a message including a notification for starting data transmission for model training or including data-related configuration information (S1902). The message may include an event parameter for terminating the model training (e.g., Event 2), a related timer parameter (e.g., a timer value), and a threshold parameter (e.g., a threshold value). For example, the configuration/confirmation message may be received with information on Functionality ID #1, Event 2 information, timer information for Event 2, and threshold information.

Before receiving the message including the notification for starting data transmission for model training or the data-related configuration information, the terminal may optionally transmit to the base station a message requesting activation of data transmission for model training (S1901). For example, the data request message for model training may include information on Functionality ID #1.

Subsequently, the terminal receives the data transmitted by the base station (S1904) and performs model training based on the received data. Here, receiving the data means repeatedly receiving RSs of the activated CSI-RS resource set #1.

Based on the timer information previously received, the terminal starts the timer. The timer may be started i) upon receiving the message including the notification for starting data transmission for model training or the data-related configuration information from the base station or ii) from the time when the terminal receives the first data resource configured/transmitted by the base station.

While the timer is running, the terminal periodically evaluates the performance of the model. If the performance value of the model reaches the threshold previously received ( i.e., if Event 1 is satisfied), the terminal determines to terminate the model training. In addition, if the threshold received from the base station is not reached while the timer is running and the timer expires (i.e., if Event 2 is satisfied), the terminal likewise determines to terminate the model training.

When the terminal determines that the model training should be terminated, the terminal transmits to the base station a message indicating that the model training has been terminated (S1905). For example, the model-training termination message may include information on Functionality ID #1.

Hereinafter, referring to FIG. 19, the base station operation is described in detail.

The base station transmits to the terminal a message including a notification for starting data transmission for model training or including data-related configuration information (S1902). The message may include an event parameter for terminating the model training (e.g., Event 2), a related timer parameter (e.g., a timer value), and a threshold parameter (e.g., a threshold value). For example, the configuration/confirmation message may be transmitted with information on Functionality ID #1, Event 2 information, timer information for Event 2, and threshold information.

Before transmitting the message including the notification for starting data transmission for model training or the data-related configuration information, the base station may optionally receive, from the terminal, a message requesting activation of data transmission for model training (S1901). For example, the data request message for model training may include information on Functionality ID #1.

Subsequently, the base station activates the data transmission resources for model training. That is, the base station activates CSI-RS resource set #1 (S1903) and performs the data transmission (S1904). Here, performing the data transmission means repeatedly transmitting RSs of the activated CSI-RS resource set #1. In the case of model training for beam management, the base station may periodically transmit beams through the configured CSI-RS.

When the termination of the terminal's model training is determined, a message indicating the termination of the model training is received from the terminal (S1905). For example, the model training termination message may be received including information on Function ID #1. When the model-training termination message is received from the terminal, the base station deactivates the data transmission resources for model training (S1906). That is, the base station deactivates CSI-RS resource set #1 and stops the transmission of the corresponding data.

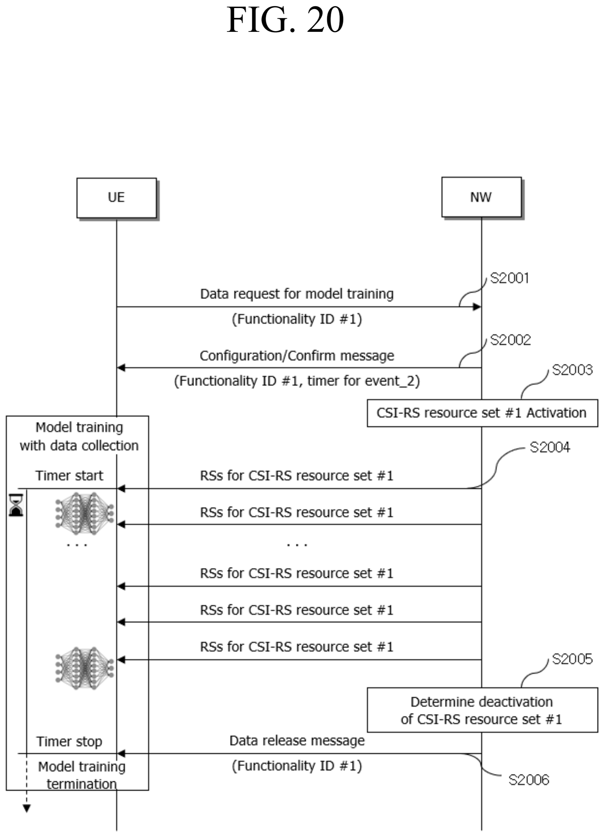

**FIG. 20** **illustrates a procedure between a terminal and a base station for event-based model training according to another embodiment of the disclosure.**

FIG. 20 illustrates a procedure between a terminal and a base station when at least Event 3 is configured.
- Event 3: The base station has stopped providing data to the terminal.

Hereinafter, the terminal operation will be described in detail with reference to FIG. 20.

The terminal receives, from the base station, a message including a notification of starting data transmission for model training or including data-related configuration information (S2002). The message may include event parameters for terminating model training (e.g., Event 1, Event 2, and/or Event 3), timer-related parameters (e.g., a timer value), and threshold-related parameters (e.g., a threshold value). As an example, the configuration/indication message may include information on Function ID #1, information for Events 1/2/3, timer information for Event 2, and threshold information.

Before receiving the message including the notification of starting data transmission for model training or including data-related configuration information, the terminal may optionally transmit to the base station a message requesting activation of data transmission for model training (S2001). For example, the data request message for model training may include information on Function ID #1.

Subsequently, the terminal receives data transmitted from the base station (S2004) and performs model training based on the received data. Here, the data reception refers to repetitive reception of RSs for the activated CSI-RS resource set #1.

Based on the previously received timer information, the terminal starts a timer. The timer may be started i) when the terminal receives the message including the notification of starting data transmission for model training or including data-related configuration information or ii) from the time point when the terminal receives the first data resource configured/transmitted by the base station.

While the timer is running, the terminal periodically evaluates the model performance. If the model performance reaches the previously received threshold (i.e., if Event 1 is satisfied), the terminal determines to terminate the model training. If Event 3 is satisfied, (i.e., if the terminal receives, from the base station, a message indicating release/deactivation of the resource for data transmission used for data collection during the timer operation), the terminal also determines to terminate the model training. For example, the terminal may receive, from the base station, a data release message including Function ID #1 (S2006) and determine to terminate the model training.

Additionally, if the threshold received from the base station is not reached while the timer is running, and the timer expires (i.e., if Event 2 is satisfied), the terminal determines to terminate the model training as well.

Hereinafter, the base-station operation will be described in detail with reference to FIG. 20.

The base station transmits to the terminal a message including a notification of starting data transmission for model training or including data-related configuration information (S2002). The message may include event parameters for terminating model training (e.g., Event 1, Event 2, and/or Event 3), timer-related parameters (e.g., a timer value), and threshold-related parameters (e.g., a threshold value). As an example, the configuration/indication message may include information on Function ID #1, information for Events 1/2/3, timer information for Event 2, and threshold information.

Before transmitting the message including the notification of starting data transmission for model training or including data-related configuration information, the base station may optionally receive, from the terminal, a message requesting activation of data transmission for model training (S2001). For example, the data request message for model training may include information on Function ID #1.

Subsequently, the base station activates the transmission resources for model training. That is, the base station activates CSI-RS resource set #1 (S2003) and transmits the data (S2004). Here, the data transmission refers to repetitive transmission of RSs for the activated CSI-RS resource set #1. When the model training is for beam management, the base station may periodically transmit beams through the configured CSI-RS.

If the base station determines to release/deactivate the CSI-RS resources configured for the terminal's model training, the base station transmits to the terminal a message indicating termination of model training (or a message indicating release/deactivation of data-related resources) and stops the requested data transmission. For example, the base station may determine to deactivate CSI-RS resource set #1 (S2005) and transmit to the terminal a data release message including Function ID #1 (S2006).

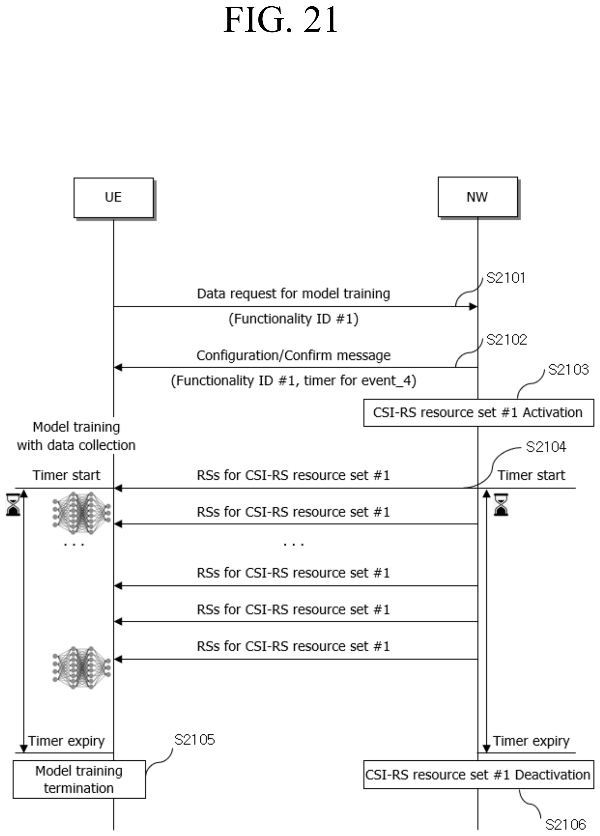

**FIG. 21** **illustrates a procedure between a terminal and a base station for event-based model training according to another embodiment of the disclosure.**

FIG. 21 illustrates a procedure between a terminal and a base station when Event 4 is configured.
- Event 4: The terminal reaches the requested/configured data collection duration (timer).

Event 4 may apply when it operates independently without Events 1 through 3. That is, the terminal or the base station configures a time duration, and model training is performed only during that time.

Hereinafter, the terminal operation will be described in detail with reference to FIG. 21.

The terminal transmits to the base station a message requesting activation of data transmission for model training (S2101). For example, the data request message for model training may include information on Function ID #1 and time information (e.g., a timer value) required for the corresponding model training.

Subsequently, the terminal receives, from the base station, a message including a notification of starting data transmission for model training or including data-related configuration information (S2102). The message may include time information (e.g., a timer value) for maintaining data transmission. As an example, the configuration/indication message may include information on Function ID #1 and timer information for Event 4.

The timer value may be included in a message transmitted from the terminal to the base station or in a message transmitted from the base station to the terminal. If the timer value is included in both messages, it is preferable to apply the timer value included in the message transmitted from the base station to the terminal with priority.

Thereafter, the terminal receives the data transmitted from the base station (S2104) and performs model training based on the received data. Here, the data reception refers to repetitive reception of RSs for the activated CSI-RS resource set #1.

The terminal starts the aforementioned timer. The timer may be started i) when the terminal receives the message including the notification of starting data transmission for model training or including data-related configuration information or ii) from the time point when the terminal receives the first data resource configured/transmitted by the base station.

While the timer is running, the terminal performs the corresponding model training, and when the timer expires (i.e., when Event 4 is satisfied), the terminal determines to terminate the model training (S2105).

Hereinafter, the base station operation will be described in detail with reference to FIG. 21.

The base station receives, from the terminal, a message requesting activation of data transmission for model training (S2101). For example, the data request message for model training may include information on Function ID #1 and time information (e.g., a timer value) required for the corresponding model training.

Subsequently, the base station transmits to the terminal a message including a notification of starting data transmission for model training or including data-related configuration information (S2102). The message may include time information (e.g., a timer value) for maintaining data transmission. As an example, the configuration/indication message may include information on Function ID #1 and timer information for Event 4.

The timer value may be included in a message transmitted from the terminal to the base station or in a message transmitted from the base station to the terminal. If the timer value is included in both messages, it is preferable to apply the timer value included in the message transmitted from the base station to the terminal with priority.

Thereafter, the base station activates the transmission resources for model training. That is, the base station activates CSI-RS resource set #1 (S2103) and performs the data transmission (S2104). Here, the data transmission refers to repetitive transmission of RSs for the activated CSI-RS resource set #1. When the model training is for beam management, the base station may periodically transmit beams through the configured CSI-RS.

The base station starts the aforementioned timer. The timer may be started i) when the base station transmits to the terminal the message including the notification of starting data transmission for model training or including data-related configuration information or ii) from the time point when the base station transmits the first data resource configured by the base station.

While the timer is running, the base station repeatedly (or periodically) transmits the corresponding data according to the configuration. When the timer expires (i.e. when Event 4 is satisfied), the base station determines to terminate the data transmission. That is, the base station deactivates CSI-RS resource set #1 (S2106).

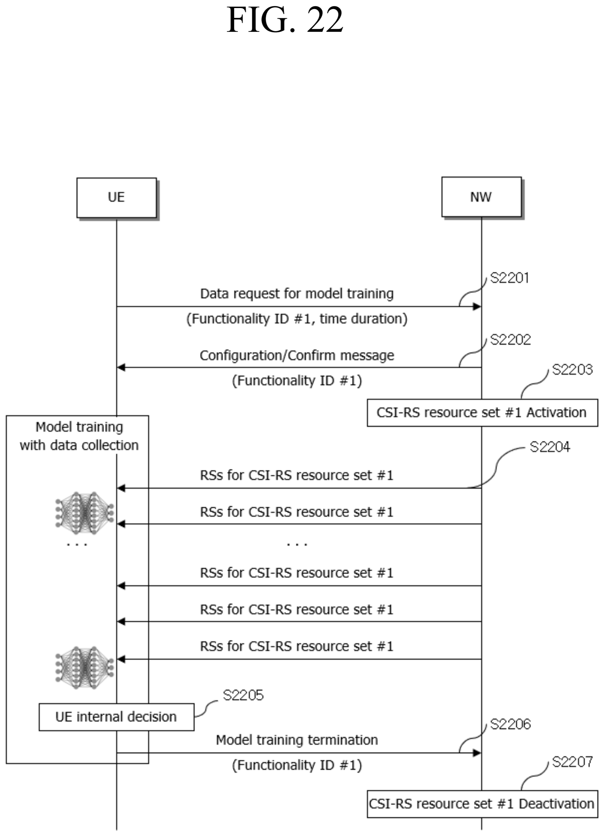

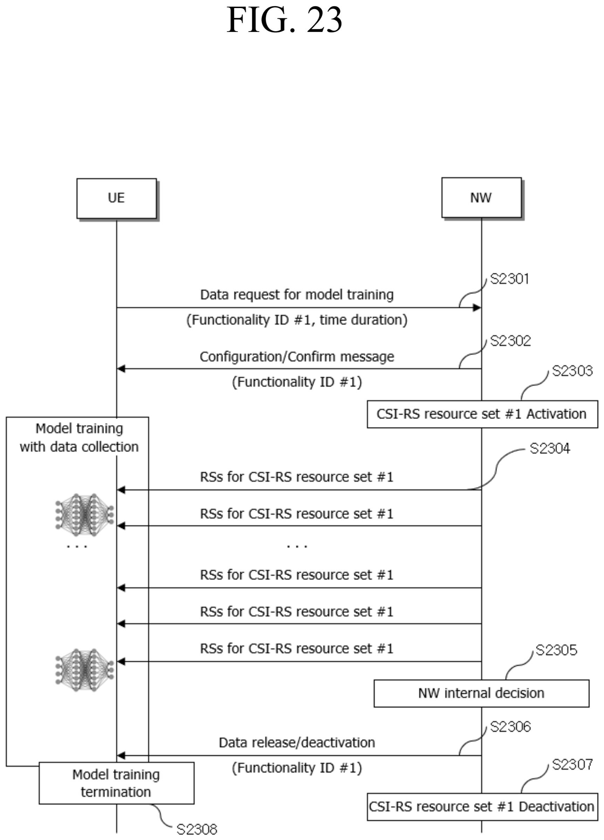

**FIGS. 22 to 23** **illustrate procedures between a terminal and a base station for explaining model-training termination according to embodiments of the disclosure.**

FIG. 22 illustrates a procedure for model-training termination performed by a terminal and a procedure for model-training termination performed by a base station.

Referring to FIGS. 22 through 23, the terminal transmits to the base station a message requesting activation of data transmission for model training (S2201, S2301). For example, the data request message for model training may include information on Function ID #1 and time-duration information (e.g., a timer value) corresponding thereto.

Subsequently, the base station transmits to the terminal a message including a notification of starting data transmission for model training or including data-related configuration information (S2202, S2302). As an example, the configuration/indication message may include information on Function ID #1.

The base station activates the transmission resources for model training, that is, the base station activates CSI-RS resource set #1 (S2203, S2303) and performs the data transmission (S2204, S2304). Here, the data transmission refers to repetitive transmission of RSs for the activated CSI-RS resource set #1. When the model training is for beam management, the base station may periodically transmit beams through the configured CSI-RS.

In the present specification, when the terminal transmits a data request message to the base station for the purpose of collecting data for model training, the terminal may transmit to the base station the amount/size of data the terminal intends to collect or the minimum time required for such data collection. Further, even without configuring the aforementioned events proposed in this specification, model-training termination may be defined based on the time or data amount included in a data request message from the terminal to the base station (or based on a time or data amount included in a configuration message from the base station indicating the start of data transmission).

First, the base station may recognize the information received from the terminal as one type of assistance information from the terminal. The base station may continue providing data until the time or data amount received from the terminal is satisfied. However, depending on base-station implementation, data transmission may terminate at any time even if the information is not fully satisfied. That is, as illustrated in FIGS. 22 through 23, a terminal that has started model training or a base station that has started data transmission may determine, according to its internal implementation, to terminate the model training (S2205, S2305). Thereafter, the terminal may transmit a model-training termination message to the base station (S2206), or the base station may notify the terminal that the data transmission will be stopped (S2306). Upon receiving the model-training termination message from the terminal, the base station deactivates the corresponding data-transmission resources (S2207). Upon receiving a data-release/deactivation message from the base station, the terminal performs model-training termination (S2308). The base station that transmits the data-release/deactivation message to the terminal then deactivates the corresponding data-transmission resources (S2307).

Next, once data transmission for model training starts, the base station must provide the terminal with data at least until the time or data amount requested by the terminal (or transmitted to the terminal) is satisfied. That is, the base station and the terminal must perform data transmission/collection until such time or data amount is satisfied. After the requested time or data amount is satisfied, model training may be terminated by transmitting a model-training termination message or a data-release/deactivation message, depending on the implementation of the base station or the terminal. Alternatively, the base station and the terminal may commonly recognize the time or data amount information configured by the terminal (or received from the base station) as the termination point for data collection and delivery. When the configured time or data amount is reached, model training must be terminated. The time duration/instance or data size/volume transmitted by the terminal or received from the base station may be used as a value determining this termination time and may be used in the same manner as the timer defined in the event-based operations proposed in the present specification.

Hereinafter, a case where a time instance is used instead of the timer defined in the present specification will be described.

A time instance may be defined as an arbitrary COUNT parameter. The terminal or the base station may include a maximum count (MAX_CNT) value in a data request or data-related configuration message. This serves the same function as the timer described above. First, a case where MAX_CNT is used instead of a timer in the aforementioned events is described. The terminal receives periodic data sets from the base station and performs model training. Each time the terminal receives one periodic data set, the terminal increments the COUNT value by 1, and if the COUNT value has not reached the MAX_CNT value, the terminal may evaluate the model performance. If the performance exceeds a threshold, the terminal transmits a model-training termination message to the base station and terminates the model training. The same operation may be performed for Event 2, Event 3, and Event 4 using whether the COUNT value reaches MAX_CNT instead of using a timer. Next, even in a case where no event is configured and only a timer is transmitted from the terminal to the base station or from the base station to the terminal, the same operation may be defined by configuring a MAX_CNT value instead of a timer.

Meanwhile, the data request/termination messages may be defined using PHY (physical), MAC (medium access control) CE (control element), or RRC (radio resource control) messages. If defined through PHY, a data-request PUCCH may be defined per terminal functionality/model, and the same PUCCH may be used when the terminal transmits a termination signaling. This is preferable when training occurs frequently, as in online learning. When parameters are defined through PUCCH, the parameter information proposed in this specification is preferably configured in a prior procedure such as functionality/model identification.

The embodiments in this disclosure may be applied independently or may be operated in any combination of forms. Furthermore, although these embodiments are described based on a 5G NR system, it may be included in the scope of this specification for all cases where the concept of this specification is applied, regardless of the specific wireless communication technology.

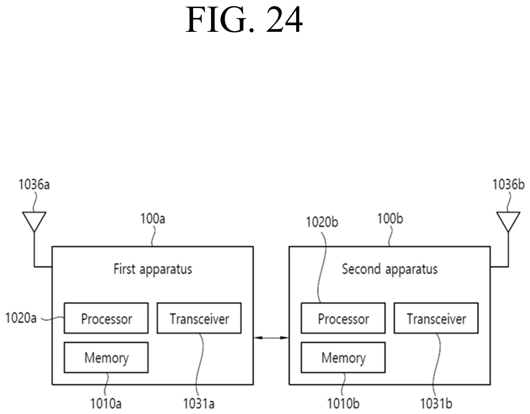

**FIG. 24** **shows apparatuses according to an embodiment of the disclosure.**

Referring to FIG. 24, a wireless communication system may include a first apparatus 100a and a second apparatus 100b.

The first apparatus 100a may include a base station, a network node, a transmission user equipment (UE), a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission UE, a reception UE, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may perform the foregoing functions, procedures, and/or methods. The processor 1020a may implement one or more protocols. For example, the processor 1020a may perform one or more layers of a radio interface protocol. The memory 1010a may be connected to the processor 1020a and configured to various types of information and/or instructions. The transceiver 1031a may be connected to the processor 1020a, and controlled to transceive a radio signal.

The second apparatus 100b may include at least one processor such as a processor 1020b, at least one memory device such as a memory 1010b, and at least one transceiver such as a transceiver 1031b. The processor 1020b may perform the foregoing functions, procedures, and/or methods. The processor 1020b may implement one or more protocols. For example, the processor 1020b may implement one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b, and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

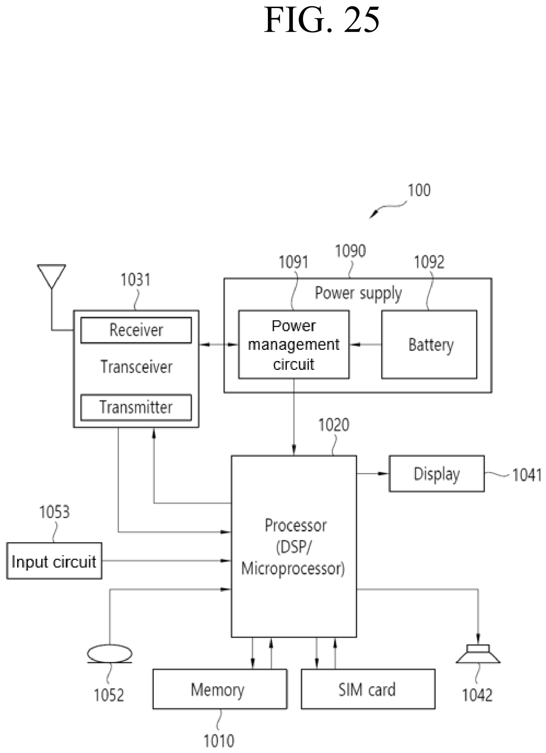

**FIG. 25** **is a block diagram showing a configuration of a terminal according to an embodiment of the disclosure.**

In particular, FIG. 25 illustrates the foregoing apparatus of FIG. 24 in more detail.

The apparatus includes a memory 1010, a processor 1020, a transceiver 1031, a power management circuit 1091, a battery 1092, a display 1041, an input circuit 1053, a loudspeaker 1042, a microphone 1052, a subscriber identification module (SIM) card, and one or more antennas.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Applet, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management circuit 1091 manages a power for the processor 1020 and/or the transceiver 1031. The battery 1092 supplies power to the power management module 1091. The display 1041 outputs the result processed by the processor 1020. The input circuit 1053 receives an input to be used by the processor 1020. The input unit 1053 may be displayed on the display 1041. The SIM card is an integrated circuit used to safely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. When the embodiment is implemented in software, the techniques described in the present disclosure may be implemented in a module (e.g., process, function, etc.) for performing the function described in the present disclosure. A module may be stored in the memory 1010 and executed by the processor 1020. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020 in a way to operate and transmits and/or receives a radio signal. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives a sound related input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

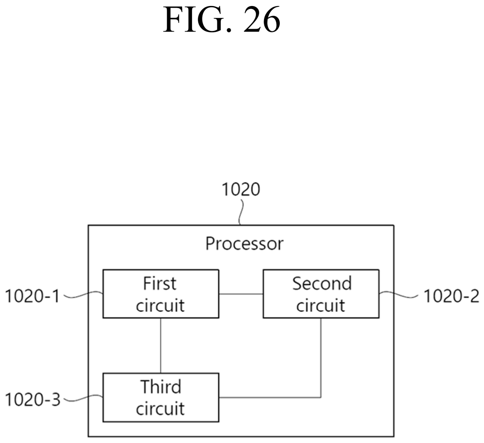

**FIG. 26** **is a configuration block diagram of a processor in which the disclosure is implemented.**

Referring to FIG. 26, a processor 1020 may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP). The processor 1020 may include at least one of a digital signal processor (DSP), a central processing unit (CPU), and a graphics processing unit (GPU).

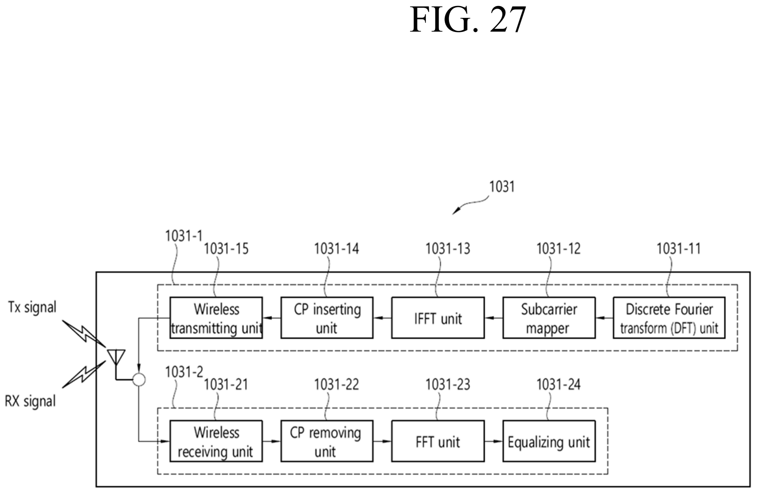

**FIG. 27** **is a detailed block diagram of a transceiver of a first apparatus shown in** **FIG. 24** **or a transceiving unit of an apparatus shown in** **FIG. 25****.**

Referring to FIG. 27, the transceiving unit 1031 includes a transmitter 1031-1 and a receiver 1031-2. The transmitter 1031-1 includes a discrete Fourier transform (DFT) unit 1031-11, a subcarrier mapper 1031-12, an IFFT unit 1031-13, a cyclic prefix (CP) insertion unit 1031-14, and a wireless transmitting unit 1031-15. The transmitter 1031-1 may further include a modulator. Further, the transmitter 1031-1 may for example include a scramble unit (not shown), a modulation mapper (not shown), a layer mapper (not shown), and a layer permutator (not shown), which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21, a CP removing unit 1031-22, an FFT unit 1031-23, and an equalizing unit 1031-24. The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of a terminal to operate in a wireless communication system, the method comprising:
receiving data for AI/ML (artificial intelligence/machine learning) model training;
performing the AI/ML model training based on the data; and
transmitting a first message indicating termination of collection of the data after performing the AI/ML model training.

2. The method of claim 1, further comprising:
receiving configuration information for receiving the data,
wherein the configuration information includes event information associated with the termination of collection of the data, and
wherein the first message is transmitted based on the event information.

3. The method of claim 1, wherein the event information includes at least one of threshold information associated with performance of the AI/ML model and time information for termination of the AI/ML model training.

4. The method of claim 1, wherein the first message is for deactivating transmission of the data.

5. The method of claim 2, further comprising:
transmitting a second message requesting transmission of the data,
wherein the configuration information is received based on the second message.

6. The method of claim 5, wherein the second message includes at least one of time information for termination of the AI/ML model training and information on an amount of the data.

7. A method of a base station to operate in a wireless communication system, the method comprising:
transmitting data for AI/ML (artificial intelligence/machine learning) model training; and
receiving a first message indicating termination of collection of the data after performing the AI/ML model training.

8. The method of claim 7, further comprising:
transmitting configuration information for transmitting the data,
wherein the configuration information includes event information associated with the termination of collection of the data, and
wherein the first message is received based on the event information.

9. The method of claim 7, wherein the event information includes at least one of threshold information associated with performance of the AI/ML model and time information for termination of the AI/ML model training.

10. The method of claim 7, wherein the first message is for deactivating transmission of the data.

11. The method of claim 8, further comprising:
receiving a second message requesting transmission of the data,
wherein the configuration information is transmitted based on the second message.

12. The method of claim 11, wherein the second message includes at least one of time information for termination of the AI/ML model training and information on an amount of the data.

13. A communication apparatus in a wireless communication system, the communication apparatus comprising:
at least one processor; and
at least one memory configured to store instructions and be operably electrically connectable to the at least one processor, wherein operations performed based on the instructions executed by the at least one processor comprise:
receiving data for AI/ML (artificial intelligence/machine learning) model training;
performing the AI/ML model training based on the data; and
transmitting a first message indicating termination of collection of the data after performing the AI/ML model training.

14. The communication apparatus of claim 13, wherein the operations performed based on the instructions executed by the at least one processor comprise:
receiving configuration information for receiving the data,
wherein the configuration information includes event information associated with the termination of collection of the data, and
wherein the first message is transmitted based on the event information.

15. The communication apparatus of claim 13, wherein the event information includes at least one of threshold information associated with performance of the AI/ML model and time information for termination of the AI/ML model training.

16. The communication apparatus of claim 13, wherein the first message is for deactivating transmission of the data.

17. The communication apparatus of claim 14, wherein the operations performed based on the instructions executed by the at least one processor comprise:
transmitting a second message requesting transmission of the data,
wherein the configuration information is received based on the second message.

18. The communication apparatus of claim 17, wherein the second message includes at least one of time information for termination of the AI/ML model training and information on an amount of the data.
